(19) Europäisches Patentamt
European Patent Office
Office européen des brevets

(11) **EP 2 156 569 B1**

(12) **FASCICULE DE BREVET EUROPEEN**

(45) Date de publication et mention de la délivrance du brevet:
**24.11.2021 Bulletin 2021/47**

(21) Numéro de dépôt: **07766033.0**

(22) Date de dépôt: **11.05.2007**

(51) Int Cl.:
***H04B 1/69*** *(2011.01)*

(86) Numéro de dépôt international:
**PCT/FR2007/051255**

(87) Numéro de publication internationale:
**WO 2008/139044 (20.11.2008 Gazette 2008/47)**

(54) **PROCEDE DE TRAITEMENT DE SIGNAL ULTRA LARGE BANDE REDRESSE ECHANTILLONNE**

VERFAHREN ZUR VERARBEITUNG VON ULTRABREITBANDIGEN GLEICHGERICHTETEN ABGETASTETEN SIGNALEN

METHOD FOR PROCESSING A SAMPLED RECTIFIED ULTRA WIDE BAND SIGNAL

(84) Etats contractants désignés:
AT BE BG CH CY CZ DE DK EE ES FI FR GB GR HU IE IS IT LI LT LU LV MC MT NL PL PT RO SE SI SK TR

(43) Date de publication de la demande:
**24.02.2010 Bulletin 2010/08**

(73) Titulaire: **Commissariat à l'Énergie Atomique et aux Énergies Alternatives**
**75015 Paris (FR)**

(72) Inventeurs:
• **DUBOULOZ, Samuel**
  **F 38180 Seyssins (FR)**
• **DE RIVAZ, Sébastien**
  **F-73800 Montmélian (FR)**
• **SAMBUQ, Mathieu**
  **F-13300 Salon De Provence (FR)**

(74) Mandataire: **Ilgart, Jean-Christophe**
**BREVALEX**
**95, rue d'Amsterdam**
**75378 Paris Cedex 8 (FR)**

(56) Documents cités:
EP-A- 1 465 354    WO-A-2005/101666
FR-A- 2 848 746    US-A1- 2005 058 210

**Description**

Domaine technique et art antérieur

La présente invention concerne un procédé de traitement de signal ultra-large bande redressé échantillonné.

Le procédé de l'invention s'applique dans le domaine des communications numériques sans fils basées sur les techniques Ultra Large Bande (« Ultra Wide Band » ou « UWB » en langue anglaise), c'est à dire utilisant des signaux dont le rapport entre la largeur de la bande à 10 dB et la fréquence centrale est supérieur à 25% (cf. référence bibliographique [1]).

Le procédé de l'invention concerne plus particulièrement la problématique de la détection de signaux Ultra Large Bande impulsionnels. Le procédé de l'invention contribue à la définition d'une nouvelle technique de détection qui favorise une intégration des circuits de détection dans un circuit intégré unique. Un but de l'invention est d'apporter une architecture de réception performante de faible complexité.

L'invention concerne le domaine de la transmission de données. La transmission de données peut se faire aussi bien dans l'air (ondes radiofréquences) que sur un support électrique ou optique.

Les applications du procédé de l'invention sont du type à réseau personnel et à réseaux locaux sans fils bas débit, à savoir : étiquettes communicantes, réseaux de capteurs, réseaux ADHOC (c'est-à-dire capables de s'auto-organiser sans infrastructure préalablement établie), localisation d'objets, sécurité, etc.

Dans les systèmes de communication Ultra Large Bande impulsionnels, les données transmises entre un émetteur et un récepteur sont des impulsions électromagnétiques codées en amplitude, en phase, ou en position [cf. référence bibliographique [2]]. Une étape critique du processus de communication entre l'émetteur et le récepteur se situe à la réception des paquets de données, pour déterminer les instants auxquels ces paquets de données arrivent au niveau du récepteur. Une synchronisation entre le signal reçu et le récepteur est alors nécessaire. Cette synchronisation est d'autant plus difficile à réaliser que le milieu dans lequel s'effectue la communication est perturbé (apparition de trajets multiples).

La norme IEEE 802.15.4a [cf. référence bibliographique [3]], qui propose une couche physique de type Ultra Large Bande pour des réseaux personnels sans fils bas débit, impose de nouvelles contraintes en termes de complexité de circuit. De plus, elle propose l'utilisation de paquets de données ayant une durée relativement élevée, associée à des contraintes particulièrement fortes sur les imperfections d'horloges. Ces deux aspects réunis impliquent de réaliser des méthodes robustes de détection et de correction des imperfections d'horloge.

Il existe actuellement de nombreuses solutions permettant d'effectuer la synchronisation d'un récepteur sur un paquet de données. Une technique fréquemment utilisée consiste à corréler le signal reçu avec une forme d'onde à différents instants (cf. les demandes de brevet WO 1996-041432, WO 2001-073712, WO 2001-093442, WO 2001-093444, WO 2001-093446, US 2005-0089083 et US 2006-0018369). Les architectures proposées permettent une synchronisation très rapide mais au prix, cependant, d'une complexité de circuit très élevée (les composants radiofréquence utilisés sont des mélangeurs, des intégrateurs, des oscillateurs locaux, etc.).

Les architectures à détection d'énergie [cf. référence bibliographique [4]] constituent à l'heure actuelle une alternative intéressante aux circuits mentionnés ci-dessus puisque leur mise en œuvre est relativement simplifiée. Cependant, dans une optique de faible complexité de circuit, les procédés de synchronisation énoncés précédemment ne sont alors plus applicables et il est préférable d'utiliser des architectures numériques.

Le brevet EP 1 465 354 divulgue le principe de la multiplication d'un signal reçu échantillonné non redressé avec une séquence de corrélation. Le signal reçu est divisé en tranches de signal successives et des multiplications sont effectuées entre les tranches de signal successives et des coefficients obtenus à partir de la séquence de corrélation. Les résultats des multiplications sont ensuite additionnés dans un circuit somme qui délivre un vecteur d'échantillons de corrélation dont la durée est celle d'une tranche du signal reçu. Cette technique présente le désavantage d'être fortement influencée par les dérives d'horloges.

Le procédé de l'invention ne présente pas les inconvénients des différentes techniques de l'art antérieur mentionnées ci-dessus.

Exposé de l'invention

En effet, l'invention concerne un procédé de traitement conforme à la revendication 1.

Le procédé de l'invention est ainsi un procédé de traitement, dans un récepteur ultra-large bande, d'un signal reçu redressé échantillonné à une fréquence $f_E$, caractérisé en ce qu'il comprend :

- au moins une corrélation glissante entre une sélection du signal reçu redressé échantillonné et une séquence de corrélation, la séquence de corrélation étant constituée d'au moins une séquence de corrélation élémentaire de durée $T_S$ égale à la durée d'une séquence S d'un signal émis qui correspond au signal reçu et constituée de données se succédant à une fréquence $f_C$ telle que $f_C = f_E/k$, k étant un nombre entier supérieur ou égal à 1, une donnée de séquence de corrélation élémentaire correspondant à une donnée d'un code d'émission utilisé pour former la séquence S et ayant une durée d'étalement comprise entre $1/f_E$ et $1/f_C$, la corrélation glissante consistant à effectuer une succession de n étapes de corrélation élémentaires, n étant un entier supérieur ou égal à 2, à une fréquence f inférieure ou égale à $f_E$ et supérieure ou égale à $f_c$, le procédé comprenant, pour chaque sélection du signal reçu :

- une étape de corrélation élémentaire consistant à effectuer une opération de corrélation entre la sélection considérée du signal reçu ultra-large bande redressé échantillonné et la séquence de corrélation, pour fournir une suite d'échantillons de corrélation intermédiaires, et
- une somme des échantillons de corrélation intermédiaires fournis pour obtenir un échantillon de corrélation élémentaire unique,

les n échantillons de corrélation élémentaires obtenus constituant un premier vecteur de corrélation.

D'autres caractéristiques du procédé de l'invention sont mentionnées dans les revendications dépendantes 2 à 22.

Dans la suite de la description, il est souvent fait référence, par souci de simplification de l'exposé, à des échantillons ou des données ayant une durée ou une fréquence. Cependant, il est connu de l'homme de l'art, qu'un échantillon ou une donnée numérique n'ont pas, en soi, de durée ou de fréquence. L'homme de l'art comprendra que, lorsque l'on parle de durée/fréquence d'un échantillon ou d'une donnée, il est fait allusion à une durée d'échantillonnage (par extension une fréquence d'échantillonnage) de l'échantillon ou à une durée d'une partie d'un signal (par exemple de corrélation) lorsque l'on parle d'un signal constitué d'une suite de données.

Brève description des figures

Les caractéristiques et avantages de l'invention sont décrits ci-dessous en référence aux figures jointes, parmi lesquelles :

- La figure 1 représente un schéma de principe de récepteur ultra-large bande concerné par le procédé de l'invention ;

- La figure 2 représente un schéma de principe du procédé de l'invention ;

- La figure 3 représente un exemple de préambule de paquet de données de signal ultra-large bande utilisé dans le cadre de l'invention ;

- La figure 4 représente un exemple de séquence S de préambule de paquet de données de signal ultra-large bande utilisé dans le cadre de l'invention en association avec le code d'amplitude d'émission qui lui correspond ;

- Les figures 5A-5C représentent trois exemples de séquence de corrélation selon l'invention ;

- Les figures 6A-6C représentent les codes d'amplitude binaires de réception utilisés pour former les séquences de corrélation respectivement représentés aux figure 5A-5C ;

- La figure 7 représente un premier exemple de mise en œuvre du procédé de l'invention;

- La figure 8 représente un deuxième exemple de mise en œuvre du procédé de l'invention ;

- La figure 9 représente, en référence aux figures 7 et 8, une étape de mise en œuvre supplémentaire du procédé de l'invention ;

- Les figures 10 et 11 représentent un troisième exemple de mise en œuvre du procédé de l'invention ;

- La figure 12 représente un quatrième exemple de mise en œuvre du procédé de l'invention ;

- La figure 13 représente une étape supplémentaire du procédé de l'invention dans le cadre du quatrième exemple de mise en œuvre du procédé de l'invention ;

- La figure 14 représente un cinquième exemple de mise en œuvre du procédé de l'invention ;

- La figure 15 représente un exemple de séquence de délimitation de début de trame et une séquence de corrélation formée à partir de la séquence de délimitation de début de trame utilisée pour la mise en œuvre du cinquième exemple de mise en œuvre du procédé de l'invention ;

- La figure 16 représente un exemple de symbole de trame utilisé dans le cadre de l'invention ;

- La figure 17 représente un procédé de démodulation de signal reçu ultra-large bande dans le cadre de l'invention ;

- Les figures 18A-18C illustrent une modification avantageuse du procédé de l'invention.

Description détaillée de modes de mise en œuvre de l'invention

Un but de l'invention est d'apporter une solution robuste et de faible complexité de détection de trames de données à des architectures de réception non cohérentes de signaux Ultra Large Bande.

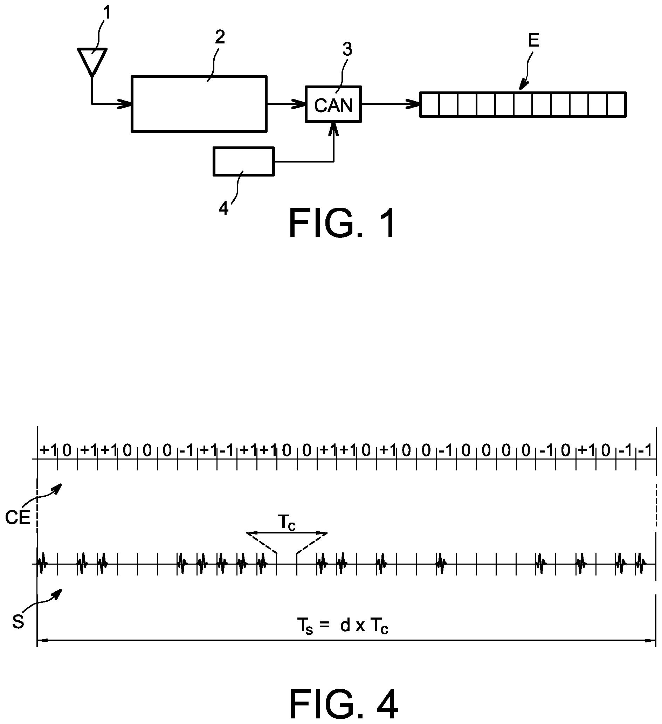

La figure 1 représente un schéma de principe de récepteur concerné par le procédé de l'invention.

Le récepteur de la figure 1 comprend une antenne de réception 1, un récepteur non cohérent (type détecteur d'énergie) 2, un convertisseur analogique/numérique (CAN) 3 et une horloge 4. Sous l'action du signal d'horloge délivré par l'horloge 4, le convertisseur analogique/numérique 3 échantillonne le signal Ultra Large Bande délivré par le récepteur 2 à une fréquence $f_E$ et délivre un signal E constitué d'échantillons de fréquence $f_E$ quantifiés sur p niveaux.

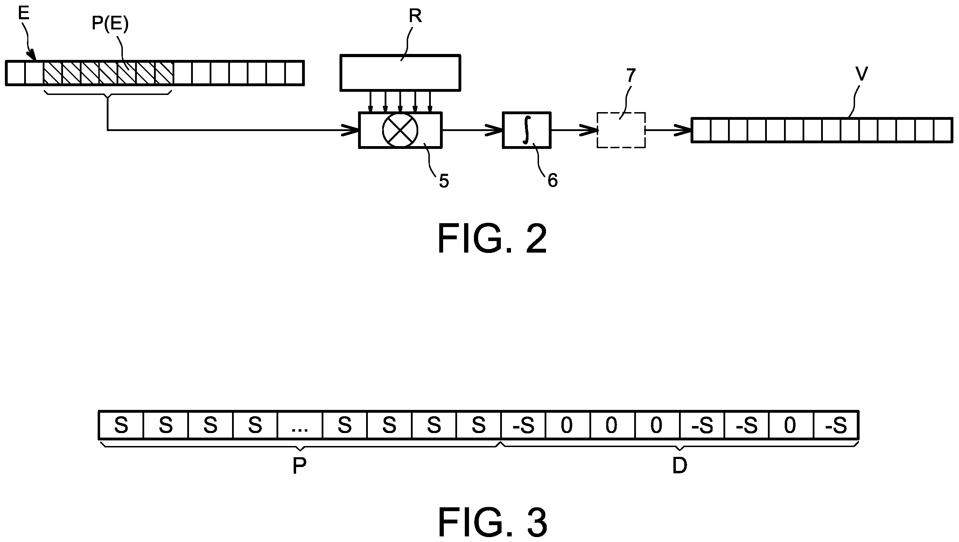

La figure 2 représente un schéma de principe du procédé de l'invention. Un corrélateur numérique 5 effectue une corrélation numérique glissante à la fréquence f entre une séquence de corrélation R et une portion P(E) du signal échantillonné E délivré par le convertisseur analogique/numérique 3. La séquence de corrélation est constituée d'une série de valeurs numériques. La portion P(E) est sélectionnée à partir d'un instant de consigne de recherche de synchronisation. La durée de la portion P(E) est égale à la durée de la séquence de corrélation R et le nombre d'échantillons d'une portion P(E) est égal au nombre de valeurs numériques composant la séquence de corrélation.

Effectuer une corrélation glissante à la fréquence f entre des portions P(E) du signal reçu et la séquence de corrélation R consiste à sélectionner, à la fréquence f, des portions successives de signal P(E) et à faire une succession de corrélations élémentaires entre chaque portion P(E) ainsi sélectionnée et la séquence R. Le corrélateur numérique 5 fournit après chaque corrélation élémentaire, une série d'échantillons de corrélation. Un dispositif d'intégration 6, placé en sortie du corrélateur numérique 5, effectue après chaque corrélation élémentaire la somme des échantillons de corrélation qui résultent de la corrélation élémentaire considérée. Le procédé de corrélation glissante de l'invention permet d'obtenir un vecteur de corrélation V dont les composantes correspondent chacune à un résultat d'intégration fourni par le dispositif d'intégration 6 pour une corrélation élémentaire donnée.

Selon une variante de l'invention, un dispositif de sélection par seuil 7 est présent en sortie de l'intégrateur 6. Le dispositif de sélection par seuil 7 a pour fonction de sélectionner, dans le signal délivré par l'intégrateur, les seuls résultats dont la valeur est supérieure à un seuil prédéterminé.

A la différence du procédé divulgué dans la demande de brevet EP 1 465 354 A1 de l'art antérieur mentionné précédemment, le procédé de l'invention fait la somme, après corrélation, de la totalité des échantillons de corrélation. La demande de brevet EP 1 465 354 propose en effet une somme partielle en sortie de l'opération de corrélation. Les deux procédés de corrélation se distinguent donc de manière significative au niveau des sommes effectuées en sortie de l'opération de corrélation. Alors que le procédé exposé dans le brevet EP 1 465 354 aboutit à un vecteur d'échantillons en sortie de l'opérateur somme dont la durée correspond à la durée d'une "tranche" du signal reçu, le procédé de l'invention délivre avantageusement une valeur unique et le vecteur de corrélation est obtenu en réitérant le processus de corrélation par décalage, à la fréquence f, de la portion d'échantillons du signal Ultra Large Bande à corréler. Par ailleurs, dans le cadre de l'invention, les échantillons sont redressés et il est ainsi possible de collecter de manière constructive la totalité de l'énergie reçu, ce que ne permet pas le procédé divulgué dans le brevet EP 1 465 354, puisque celui-ci utilise des échantillons signés, c'est-à-dire non redressés.

Dans le cadre d'une transmission ultra large bande impulsionnelle, les données sont représentées par des impulsions séparées dans le temps. Afin de permettre la détection de l'instant d'arrivée du signal contenant les données binaires, un préambule est ajouté au début d'une trame de données. Ce préambule est destiné à la synchronisation entre le récepteur et le signal reçu.

Un exemple de préambule est donné sur la figure 3. Le préambule contient deux parties : une séquence de synchronisation P destinée à la synchronisation entre le récepteur et le signal reçu et une séquence de délimitation de début de trame D, communément appelée « délimiteur de début de trame », qui indique l'instant d'arrivée du premier symbole de données. La partie P de synchronisation du préambule consiste en une répétition de séquences communément appelées "séquences S". Chaque séquence S est construite à partir d'un code d'émission à la fréquence $f_c$ ($f_c=1/T_c$). La Figure 4 montre un exemple de séquence S et le code d'émission CE qui lui correspond.

La séquence S a une durée $T_S$ et comprend une succession d'impulsions codées, ou mots codés, de durée $T_C$ ($T_S = d \times T_C$, d étant un entier supérieur à 1) . Le code d'émission de fréquence $f_C$ est un code à trois états : +1, 0, -1. A l'état « +1 » correspond l'émission d'un train d'impulsions commençant par une impulsion d'amplitude positive dans une durée $T_C$, à l'état « 0 » correspond une absence d'impulsion émise dans une durée $T_C$ et à l'état « -1 » correspond l'émission d'un train d'impulsions commençant par une impulsion d'amplitude négative dans une durée $T_C$.

Une séquence de corrélation R de l'invention est construite à partir de la séquence S qui a été émise et, partant, du code d'émission associé à la séquence S émise.

Au code ternaire d'émission CE de fréquence $f_C$ est associé un code binaire de réception de fréquence $f_C$. Dans une première variante de l'invention, les deux états du code binaire de réception sont les états « +1 » et « 0 », l'état « +1 » du code de réception étant associé aux états « +1 » et « -1 » du code d'émission. Dans une deuxième variante de l'invention, les deux états du code binaire de réception sont les états « +1 » et « -1 », l'état « +1 » du code de réception étant associé aux états « +1 » et « -1 » du code d'émission.

Un code de réception dont les valeurs binaires sont +1 et 0 conduit à la formation d'une séquence R de moyenne non nulle, ce qui génère une composante continue pouvant être préjudiciable à la prise de décision (synchronisation grossière, synchronisation fine, estimation du canal, etc.). Le code binaire dont les valeurs sont +1 ou -1, dit code binaire centré, ne présente pas cet inconvénient.

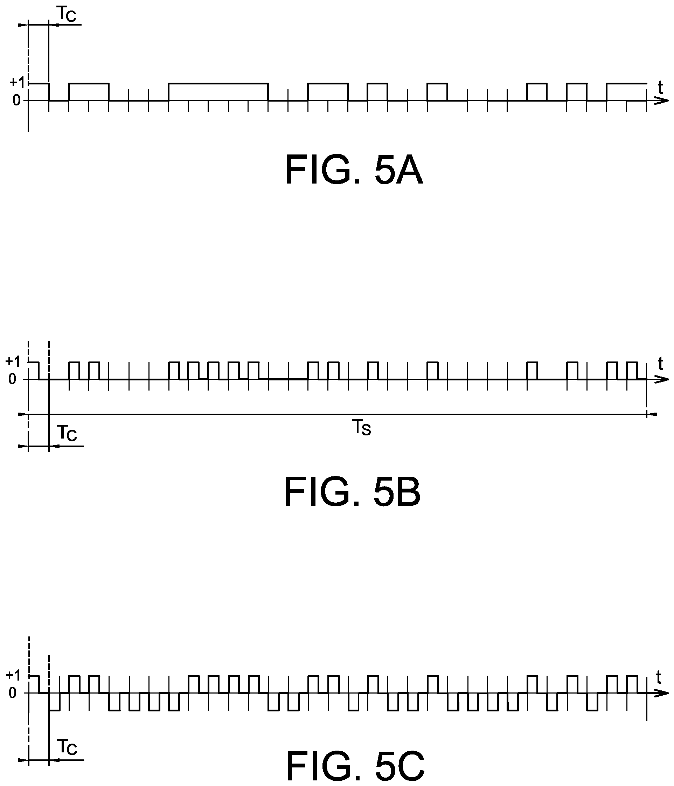

Les figures 5A et 5B représentent deux exemples de séquences R pour lesquelles les deux états du code binaire de réception sont les états « +1 » et « 0 » et la figure 5C représente un exemple de séquence R pour laquelle les deux états du code binaire de réception sont « +1 » et « -1 ».

Dans l'exemple de la figure 5A, la valeur binaire 1 dure toute la durée $T_C$ alors que, dans l'exemple de la figure 5B, la durée de la valeur binaire 1 est $T_C/2$. De façon plus générale, la fréquence d'échantillonnage $f_E$ étant telle que :

$$f_E = K \times f_C,$$

où K est un entier supérieur ou égal à 1, la valeur 1 pourra être prise, par pas de durée $T_C/K$, entre une durée minimale $T_C/K$ et une durée maximale $T_C$.

Dans l'exemple de la figure 5C, les valeurs binaires +1 ou -1 que prend la séquence R ont une durée égale à $T_C/2$. De même que ci-dessus, de façon plus générale, les valeurs binaires +1 ou -1 que peut prendre la séquence R sont prises par pas de durée $T_C/K$, entre une durée minimale $T_C/K$ et une durée maximale $T_C$.

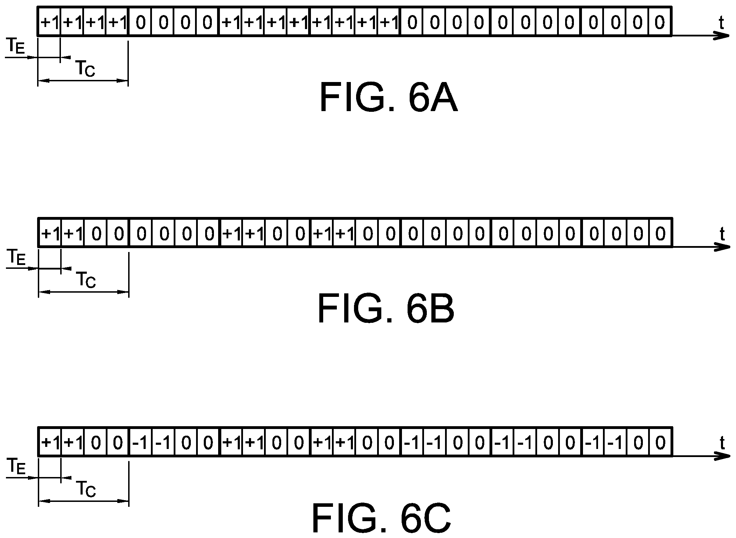

Les figures 6A-6C illustrent de manière symbolique, sous forme de données binaires, les séquences de corrélation R respectivement représentées aux figures 5A-5C.

La modulation de la durée des données binaires qui composent la séquence de corrélation R constitue un filtrage numérique passe-bas extensible dont la fréquence de coupure peut varier de $1/T_C$ à $K/T_C$. Comme cela sera précisé dans les exemples ci-dessous, il est alors avantageusement possible d'utiliser une fréquence de coupure faible pour la synchronisation approximative et une fréquence de coupure plus élevée, voire la plus élevée, pour une synchronisation fine.

Un avantage qui résulte de l'utilisation d'un signal binaire est la réduction de complexité au niveau du circuit bande de base. En effet, le processus de corrélation ne consiste plus qu'en une addition d'échantillons numériques. La multiplication consiste à annuler les échantillons correspondant aux zones où le signal de corrélation est nul, et l'intégration consiste à additionner les échantillons non nuls après multiplication.

La durée de la séquence de corrélation R correspond par défaut à la durée $T_S$ de la séquence S. Cette durée peut toutefois être augmentée pour devenir un multiple entier de la durée de la séquence S ($T_R = k \times T_S$, où k est un nombre entier supérieur ou égal à 1). La séquence de corrélation R est alors constituée d'une succession de séquences de corrélation élémentaires de durée $T_S$, chaque séquence de corrélation élémentaire de durée $T_S$ étant déterminée comme cela a été mentionné précédemment. Augmenter la durée de la séquence R présente l'avantage d'augmenter la corrélation, ce qui peut être particulièrement utile pour augmenter le gain de traitement ou lorsque le convertisseur analogique/numérique du récepteur (cf. figure 1) a une fréquence d'échantillonnage faible et/ou une quantification sur peu de niveaux.

Comme cela va maintenant être détaillé dans la suite de la description, l'architecture bande de base représentée en figure 2 permet à la fois d'effectuer une synchronisation temporelle et une synchronisation fréquentielle. La synchronisation temporelle est effectuée en deux étapes. Une première étape consiste à se synchroniser de manière assez grossière sur la séquence S, avec une granularité temporelle correspondant à la durée $T_C$. Une fois ce processus effectué, une deuxième étape consiste à s'aligner de manière précise sur la séquence S, avec une granularité temporelle correspondant à la période d'échantillonnage ($1/f_E$) du signal en entrée du circuit de synchronisation. La synchronisation en fréquence permet de déterminer les éventuelles imperfections d'horloges.

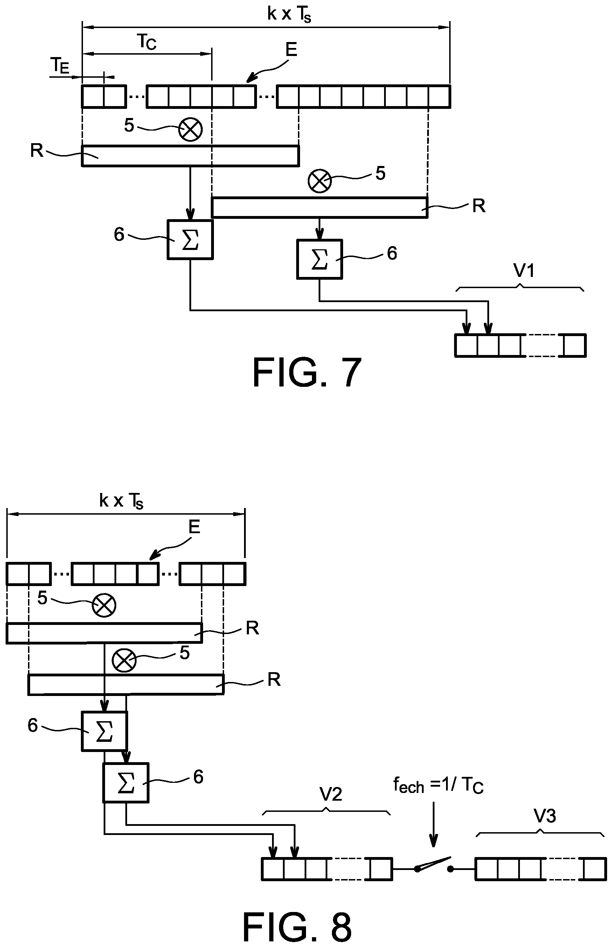

La première étape de la synchronisation temporelle consiste à déterminer grossièrement l'instant d'arrivée d'une séquence S à partir de la corrélation glissante entre une portion P(E) des échantillons reçus et la séquence de corrélation R. Les figures 7 et 8 représentent deux exemples de cette première étape. Dans le cas du premier exemple représenté en figure 7, la corrélation est effectuée avec une période égale à $T_C$ ($f=1/T_C$). Dans le cas du deuxième exemple représenté en figure 8, la corrélation est effectuée avec une période égale à $T_E$ ($f=1/T_E$). Ces exemples constituent deux situations extrêmes entre lesquelles la fréquence f de corrélation peut prendre toute valeur possible intermédiaire. De même, la séquence de corrélation R peut être construite selon l'une quelconque des formes mentionnées précédemment en référence aux figures 5A-5C. Toutefois, selon le mode de réalisation préférentiel de l'invention, on utilisera, pour réaliser la synchronisation grossière, un filtrage passe-bas d'étalement $T_C$ pour former la séquence R et une fréquence de corrélation égale à $f_C$.

Dans les deux cas décrits ci-dessus, les échantillons obtenus après chaque corrélation sont sommés (sommateurs 7) . Dans le premier cas (figure 7), les résultats des sommations successives constituent les composantes d'un vecteur de corrélation V1. Dans le deuxième cas (figure 8), les résultats des sommations successives constituent les composantes d'un vecteur de corrélation V2 qui, échantillonnées à une fréquence d'échantillonnage $1/T_C$, constituent un vecteur de corrélation échantillonné V3.

La synchronisation grossière du signal reçu est acquise lorsqu'au moins deux échantillons sélectionnés du vecteur de corrélation V1 (cf. figure 7) ou du vecteur de corrélation V3 (cf. figure 8) sont séparés d'une durée sensiblement égale à $T_S$.

La position temporelle $T_{synchro}$ du dernier échantillon qui satisfait à la condition mentionnée ci-dessus est alors considérée comme l'instant d'arrivée approximatif d'une séquence de préambule du signal reçu.

Selon un perfectionnement de l'invention (non représenté sur les figures 7 et 8), une fois une corrélation effectuée sur toute la durée d'une séquence S du signal reçu, les valeurs des échantillons de corrélation sont comparées à un seuil et toutes les valeurs de corrélation inférieures au seuil sont éliminées. L'analyse de la position temporelle des échantillons restants (c'est-à-dire ceux supérieurs au seuil) est effectuée et une nouvelle série de corrélation est effectuée pendant la durée d'une séquence. La synchronisation grossière du signal reçu est alors acquise lorsqu'au moins deux échantillons successifs du vecteur de corrélation V1 (cf. figure 7) ou du vecteur de corrélation V3 (cf. figure 8) sont séparés d'une durée sensiblement égale à $T_S$. L'utilisation d'un seuil permet d'éliminer la majorité des valeurs de corrélation ne correspondant pas à la présence de signal. Ce seuil a pour effet de réduire la probabilité de fausse alarme (i.e la probabilité que le récepteur se synchronise alors qu'aucune trame de données n'a été envoyée). Cette probabilité de fausse alarme peut être également réduite par l'alignement de m maxima, m étant un entier supérieur à 2, la condition étant que la durée qui sépare deux maxima successifs de l'alignement des m maxima soit sensiblement égale à $T_S$. Cela permet ainsi de réduire considérablement la probabilité de se synchroniser sur un maximum secondaire de la fonction d'autocorrélation de la séquence S. Plus m est élevé, moins le récepteur est sensible à la probabilité de fausse alarme.

Le procédé de synchronisation de l'invention implique un temps d'acquisition supérieur ou égal à une durée de m séquences que l'on recherche à aligner. Le procédé de l'invention est en conséquence avantageusement conforme à la norme IEEE 802.15.4a qui autorise l'utilisation d'un nombre important de séquences pour la synchronisation.

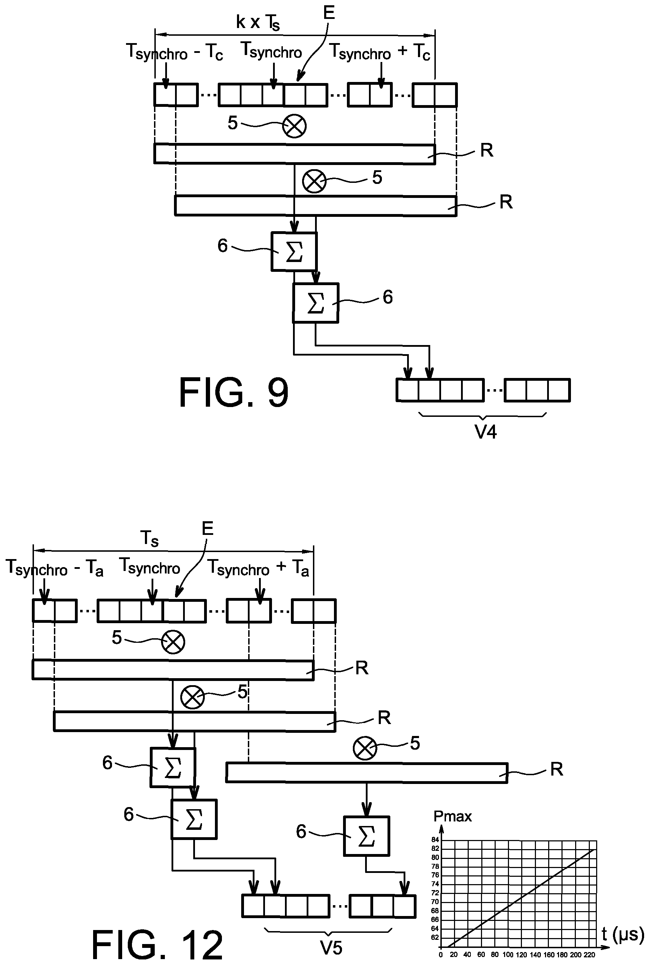

Une fois la synchronisation temporelle grossière effectuée, une étape de synchronisation temporelle fine permet de déterminer avec précision l'instant de réception de la séquence, avec une précision temporelle correspondant à la période d'échantillonnage ($1/f_E$) du signal reçu numérisé. L'étape de synchronisation temporelle fine est illustrée en figure 9. Elle consiste à effectuer une corrélation entre le signal reçu numérisé et la séquence de corrélation R dans un intervalle de temps situé autour de l'instant $T_{synchro}$ déterminé précédemment. La synchronisation approximative ayant été effectuée précédemment avec une précision temporelle égale à $T_C$, il est nécessaire de faire glisser la corrélation entre les instants $T_{synchro}$ - $T_c$ et $T_{synchro}$ + $T_c$. Une sommation des échantillons de corrélation est effectuée après chaque corrélation (sommateurs 6). La corrélation glissante conduit alors à constituer un vecteur de corrélation V4 à partir du résultat des différentes sommes. L'instant d'arrivée de la séquence correspond alors à la position temporelle de l'échantillon de corrélation du vecteur V4 pour laquelle la corrélation est maximale.

Dans le cas où la corrélation a été effectuée toutes les $T_C$ secondes pour la synchronisation temporelle approximative (cf. figure 7), il est nécessaire d'attendre la réception d'une nouvelle séquence pour se synchroniser de manière précise. Dans le cas où la corrélation a été effectuée à la fréquence d'échantillonnage du signal numérisé ($f_E$), la synchronisation fine peut être effectuée immédiatement, à partir de la dernière séquence reçue, en utilisant le vecteur de corrélation V2 obtenu avant l'échantillonnage qui conduit à l'obtention du vecteur V3 (cf. figure 8). Cette dernière solution permet avantageusement d'utiliser k séquences S de moins, mais nécessite un plus grand nombre de corrélations pendant la phase de synchronisation grossière, ce qui peut impliquer une consommation électrique plus élevée.

La valeur de l'instant de synchronisation $T_{synchro}$ obtenue à la suite de la synchronisation approximative est alors rafraîchie à l'aide de l'instant déterminé par l'étape de synchronisation fine.

Outre la synchronisation du signal reçu, le procédé de traitement de l'invention concerne également une estimation du canal de propagation entre l'émetteur et le récepteur. Le canal de propagation se modélise par les trajets multiples (répétitions différées, atténuées ou déformées) qui sont dus aux obstacles rencontrés par le signal qui se propage. L'estimation du canal peut être effectuée soit indépendamment des étapes de synchronisation décrites ci-dessus, soit après la phase de synchronisation temporelle fine décrite ci-dessus. L'estimation du canal permet de déterminer avec précision la position des trajets les plus énergétiques. L'estimation de canal sert à adapter le signal de corrélation binaire (fenêtre d'intégration) à la réponse impulsionnelle du canal (position des différents trajets) et donc à la configuration spécifique d'espace de propagation rencontrée entre l'émetteur et le récepteur.

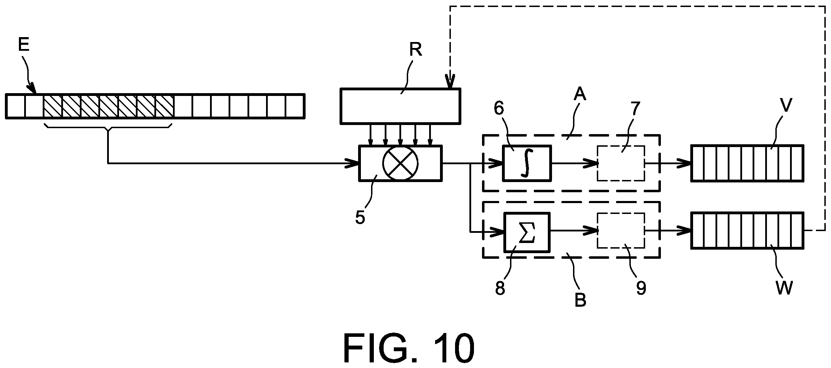

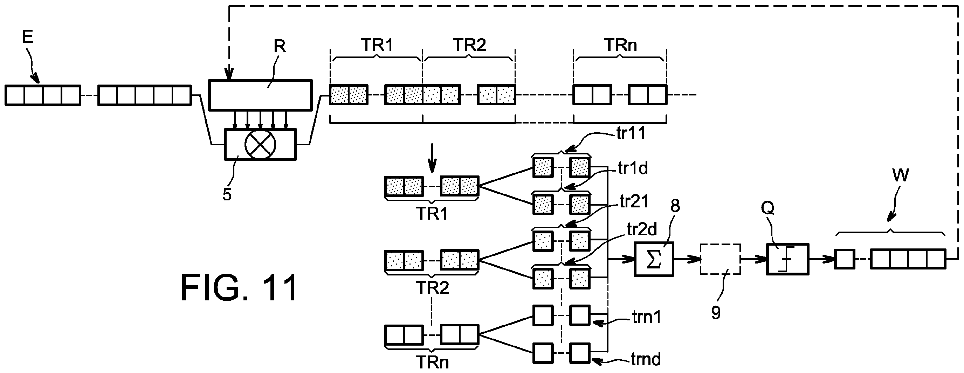

Les figures 10 et 11 illustrent une étape d'estimation de canal selon l'invention. La figure 10 représente un schéma de principe et la figure 11 représente un schéma détaillé. Outre les éléments déjà décrits en figure 2, la figure 10 comprend un sommateur 8 et, éventuellement, un dispositif de sélection par seuil 9 qui constituent une voie de traitement B en parallèle avec la voie de traitement A constituée des éléments 6 et 7 mentionnés précédemment.

Le corrélateur 5 effectue ici une multiplication entre le signal numérisé E et la séquence de corrélation R. L'estimation de canal peut se faire sur une ou plusieurs séquences S du signal numérisé E.

Pour chaque séquence S reçue, le signal numérisé E est multiplié avec une séquence de corrélation R d'une durée $T_R$ ($T_R = k \times T_S$, où k est un nombre entier supérieur ou égal à 1) et dont la durée d'étalement de chacune des données est sensiblement égale à $1/f_C$.

Le produit issu de cette multiplication est ensuite découpé en une succession de « tranches » de durée $T_S$, chaque « tranche » de durée $T_S$ étant elle-même découpée en d « tranches » de durée $T_C$. Comme cela apparaît, à titre d'exemple, sur la figure 11, le signal issu de la multiplication est ainsi divisé en n tranches TR1, TR2, ..., TRn de durée $T_S$ et :

- la tranche TR1 est découpée en d « tranches » tr11, tr12, ..., tr1d de durée $T_C$,

- la tranche TR2 est découpée en d « tranches » tr21, tr22, ..., tr2d de durée $T_C$,

- la tranche TRn est découpée en d « tranches » trn1, trn2, ..., trnd de durée $T_C$,

Les « tranches » de durées $T_C$ sont ensuite accumulées, échantillon par échantillon, dans le sommateur 8 (cf. figures 10 et 11). Un seuil peut être appliqué au résultat des accumulations de façon à ne conserver que les parties de la réponse impulsionnelle les plus énergétiques (cf. le dispositif de comparaison à un seuil 9 sur les figures 10 et 11). Enfin, le signal résultant de l'application du seuil est quantifié sur 1 bit (cf. l'opérateur de quantification Q sur la figure 11). Les signaux binaires ainsi obtenus constituent un vecteur d'estimation de canal W de durée $T_C$. Les signaux binaires qui composent le vecteur d'estimation de canal W peuvent alors avantageusement être réinjectés dans la séquence de corrélation R, en remplacement des zones où le signal binaire de la séquence de corrélation est égal à 1.

Selon un perfectionnement de l'invention, l'estimation de canal peut être améliorée en augmentant la dynamique du vecteur d'estimation de canal W. Pour cela, on fixe plusieurs seuils permettant d'ajouter du poids aux échantillons les plus significatifs. Cette technique permet de conserver l'information sur l'énergie contenue dans chaque échantillon de temps. Une position temporelle contenant une forte valeur d'énergie a ainsi une contribution plus importante lors de la démodulation, améliorant de ce fait les performances du récepteur en démodulation. La contrepartie de cette technique est une complexité accrue au niveau du corrélateur 5, car la séquence de corrélation R ne peut pas être une séquence de données binaires. Pour obtenir une estimation de canal pondérée, il suffit de supprimer l'opérateur Q de quantification sur 1 bit.

Selon un autre mode de réalisation de l'invention, l'estimation de canal est effectuée directement par la voie de traitement A. Le vecteur d'estimation de canal est alors formé par le vecteur de corrélation issu de la corrélation glissante entre une séquence S sélectionnée à partir du signal reçu redressé échantillonné et une séquence de corrélation R dont la durée d'étalement des données est sensiblement égale à $1/f_E$. De même que cela a été mentionné précédemment, les signaux binaires qui composent le vecteur d'estimation de canal V peuvent alors avantageusement être ensuite réinjectés dans la séquence de corrélation R dont la durée d'étalement est préalablement réactualisée pour être égale à la durée du vecteur V :

- 1) en remplacement des zones où le signal binaire de la séquence de corrélation est égal à 1, dans le cas où la séquence de corrélation est composée de « 1 » et de « 0 », ou

- 2) dans le cas où la séquence de corrélation est composée de « 1 » et de « -1 », en remplacement des zones où le signal binaire de la séquence de corrélation est non nul (i.e. égal à 1 où à -1) et ceci conformément au signe de l'élément de la séquence : les éléments de la séquence de corrélation égaux à +1 sont remplacés par les éléments du vecteur d'estimation de canal V alors que les éléments de la séquence de corrélation égaux à -1 sont remplacés par les opposés, au sens arithmétique, des éléments du vecteur d'estimation de canal V, c'est-à-dire par les éléments du vecteur -V.

Le procédé de traitement de l'invention concerne également un procédé de synchronisation fréquentielle pour estimer la dérive des signaux d'horloge du récepteur. La figure 12 représente le procédé de synchronisation fréquentielle de l'invention.

Les imperfections liées à la dérive des horloges (« clock drift » en anglais) constituent un problème important dans le domaine de l'Ultra Large Bande. En effet, la norme IEEE 802.15.4a prévoit l'utilisation de trames de données relativement longues (de l'ordre de quelques millisecondes) associées à des contraintes relativement faibles au niveau de la précision des horloges. Il est donc impératif de pouvoir estimer ces imperfections et d'être en mesure de les corriger.

L'invention propose l'utilisation de la même architecture en bande de base que celle décrite précédemment pour l'estimation de la dérive de l'horloge. Une fois l'instant d'arrivée $T_{synchro}$ de la séquence S connu, une corrélation glissante entre le signal reçu numérisé et la séquence de corrélation binaire R est effectuée, à la fréquence $f_E$, pour chaque nouvelle séquence S, entre deux instants $T_{synchro} - T_a$ et $T_{synchro} + T_a$ situés autour du nouvel instant de synchronisation $T_{synchro}$. La valeur de $T_a$ est préférentiellement choisie supérieure ou égale au glissement maximal. La séquence de corrélation binaire R peut être ou non modifiée suite à l'estimation de canal décrite ci-dessus. Les échantillons de corrélation de chaque corrélation élémentaire sont sommés et un vecteur de corrélation V5 est établi à partir du résultat des différentes sommes. La position du maximum de corrélation est alors recherchée dans le vecteur de corrélation V5. Une comparaison des composantes du vecteur de corrélation avec un seuil (non représentée sur la figure) peut également être effectuée avant la recherche du maximum de corrélation.

Si, pour une séquence S donnée, toutes les composantes du vecteur de corrélation n'ont pas une valeur significative ou sont inférieures au seuil dans le cas de la comparaison à un seuil, alors aucune composante du vecteur de corrélation n'est prise en compte pour cette séquence. Sinon, il apparaît un maximum de

corrélation $P_{max}$ de valeur significative. Si les horloges ne sont pas parfaites, la position de ce maximum varie d'une séquence S à l'autre. La dérive des horloges étant un phénomène constant, la position du maximum de corrélation varie de manière linéaire dans le temps, décrivant ainsi une droite (cf. figure 12). La pente de cette droite correspond alors à une estimation de la dérive de l'horloge. Plus le nombre de séquences S utilisées pour l'estimation de la pente est important, plus l'estimation de la dérive d'horloge est précise.

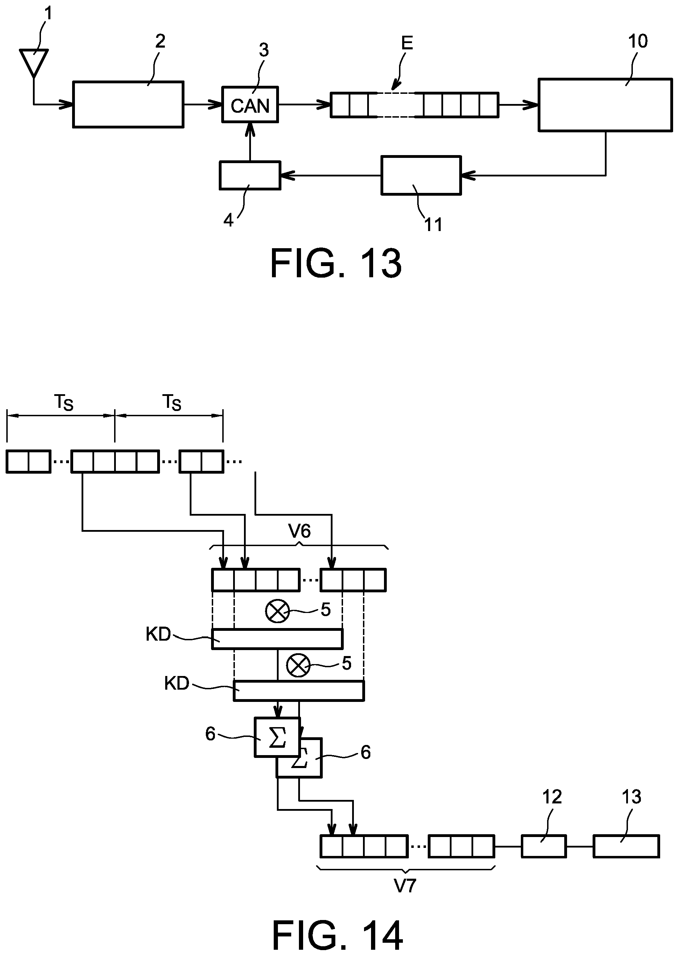

Une fois évaluée, l'estimation de la dérive d'horloge peut être prise en compte de deux manières différentes. Une première manière consiste à modifier la fréquence de fonctionnement de l'horloge à partir de l'estimation de la dérive d'horloge. La figure 13 illustre un schéma de récepteur non cohérent dans lequel la fréquence de l'horloge est corrigée de cette manière. En plus des éléments représentés en figure 1, le récepteur non cohérent comprend un bloc de synchronisation et de calcul de dérive d'horloge 10 et un bloc de correction de dérive 11 qui délivre, à partir d'un signal délivré par le bloc 10, un signal de correction appliqué à l'horloge 4. Le bloc de correction de dérive d'horloge 11 est un bloc connu en soi, tel que, par exemple, une PLL fractionnaire (PLL pour « Phase Locked Loop ») dont le rapport fractionnaire est commandé par l'estimation du glissement. Une deuxième manière de prendre en compte la dérive d'horloge est, dans un premier temps, de mémoriser l'estimation de dérive d'horloge, et, dans un deuxième temps, d'utiliser cette estimation mémorisée lors de la démodulation, pour déplacer au fur et à mesure la fenêtre contenant l'estimation de canal de manière à décaler peu à peu la corrélation dans le temps (cf. plus loin la description relative à la démodulation du signal reçu).

La figure 14 représente un procédé de traitement de l'invention pour la recherche du délimiteur de début de trame.

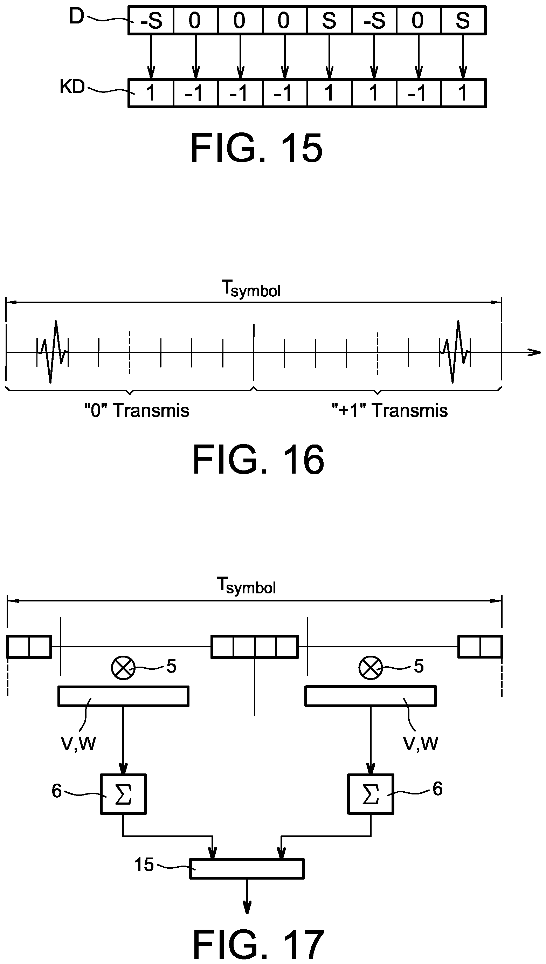

Le délimiteur de début de trame D situé en fin du préambule (cf. figure 3) indique l'instant d'arrivée du signal contenant les données transmises. Il se distingue de la partie destinée à la synchronisation par le fait qu'il comprend une succession de séquences codées affectées d'un coefficient positif, négatif ou nul. Selon l'invention, la détection du délimiteur de début de trame s'effectue avantageusement avec la même architecture bande de base que celle décrite précédemment. Son principe est décrit à l'aide des figures 14 et 15.

Lors de l'estimation de la dérive d'horloge, les maxima de corrélation sont conservés et un vecteur de corrélation constitué de ces maxima de corrélation est constitué. Lorsque, pour une séquence S, le maximum de corrélation n'est pas significatif ou ne dépasse pas un seuil, la valeur de ce maximum est soit conservée, soit fixée à 0 (cette situation correspond au cas où la séquence a été codée avec la valeur 0, donc aucun signal n'a été transmis pendant la durée d'une séquence).

Par ailleurs, une séquence de référence de début de trame KD est constituée à partir du délimiteur de début de trame D (cf. figure 15 à titre d'exemple). La séquence de référence de début de trame KD a une durée égale à la durée d'un délimiteur de début de trame de préambule et est constituée de valeurs binaires définies conformément aux mots qui constituent les données du délimiteur de début de trame D de telle sorte qu'une valeur binaire de séquence de référence de début de trame prend une première valeur (1) lorsqu'un mot du délimiteur de début de trame a une valeur non nulle et une deuxième valeur (-1) lorsqu'un mot du délimiteur de début de trame a une valeur nulle.

Une corrélation glissante est alors effectuée (cf. figure 14) entre les composantes du vecteur de maxima de corrélation et la séquence de référence de début de trame KD, la corrélation glissante consistant à effectuer une succession de n étapes de corrélation élémentaires, n étant une nombre entier supérieur ou égal à 2, à une fréquence 1/Ts, entre les composantes du vecteur de maxima de corrélation et la séquence de référence de début de trame. Les échantillons de corrélation résultant de chaque étape de corrélation élémentaires sont ensuite sommés et les résultats des différentes sommes constituent un vecteur de corrélation de délimiteur de début de trame V7. Une comparaison à un seuil peut également être ici effectuée après les opérations de sommation et avant la constitution du vecteur de délimitation de début de trame.

Les composantes du vecteur de délimitation de début de trame sont ensuite comparées à une valeur de seuil (12). Le délimiteur de début de trame, ou instant d'arrivée du signal contenant les données transmises, est alors déterminé par la position temporelle de la composante temporelle du vecteur de délimitation de début de trame qui dépasse le seuil (opération de décision 13).

L'invention concerne également un procédé de démodulation du signal reçu. Ce procédé de démodulation est représenté en figure 17. Le procédé de démodulation de l'invention est plus particulièrement adapté à la modulation de position prévue par la norme IEEE 802.15.4a (« Pulse Position Modulation » ou PPM en langue anglaise) pour laquelle un symbole de données est représenté par sa position à l'intérieur d'une période temporelle $T_{symbol}$. De façon connue en soi, un décalage temporel, communément appelé « Time Hopping » en langue anglaise, peut également être rajouté. La figure 16 représente, à titre d'exemple non limitatif, un exemple de modulation 2-PPM combinée à un code de « Time Hopping » de 4 valeurs.

Lorsque le signal a été reçu pendant une durée $T_{symbol}$ (i.e. un symbole complet a été reçu), il est divisé en N tranches de signal de durée $T_{symbol}/N$, N étant l'ordre de la modulation PPM utilisée (PPM pour « Pulse-Position Modulation » ou Modulation d'Impulsion en Position), le signal contenu dans chacune des N tranches étant ainsi décalé afin de supprimer le codage de « Time Hopping ». Les tranches de signal sont ensuite multipliées (opérateur de corrélation glissante 5) par le vecteur d'estimation de canal W. Les résultats de chaque multiplication sont alors sommés (opérateurs 6). Les N sommes sont ensuite comparées (opérateur de comparaison 15). La somme la plus élevée donne la position de l'impulsion et ainsi la valeur du symbole transmis. Les portions de signal sont sélectionnées en tenant compte du code de « Time Hopping » qui est connu.

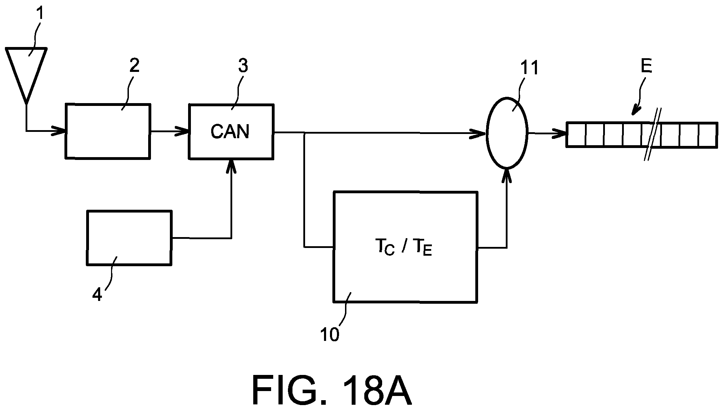

Les figures 18A-18C illustrent une modification avantageuse du procédé de l'invention. Selon cette modification, chaque échantillon du signal redressé échantillonné E est comparé, à un instant $t_O$, avec l'échantillon qui lui correspond à l'instant $t_O$-$T_C$ qui précède. Comme cela est représenté en figure 18A, outre les éléments déjà mentionnés en référence à la figure 1, le récepteur de l'invention comprend alors un opérateur de retard 10 et un comparateur 11. L'opérateur de retard 11 opère un retard de $T_C/T_E$ échantillons. On prend alors une décision dure sur le signe de l'échantillon différentiel délivré par le comparateur 11 de manière itérative sur le flux des échantillons arrivant. Si le signe de la différence des deux échantillons séparés d'une durée Tc est négatif, le résultat de la décision est -1, sinon, le résultat de la décision est +1. On effectue ensuite une corrélation avec une séquence de corrélation spécifique $R_S$.

La formation d'une séquence de corrélation spécifique $R_S$ à partir d'un exemple de code binaire de réception de fréquence $f_C$ est décrite ci-dessous.

Un exemple de code binaire C1 de réception à la fréquence $f_C$ peut s'écrire :
+1 ; +1 ; 0 ; +1 ; +1 ; 0 ;0 ;0

Le code binaire C2 obtenu en décalant toutes les données d'une durée $T_C$ s'écrit alors :
+1 ; 0 ; +1 ; +1 ; 0 ; 0 ; 0 ; +1

Le code différentiel C3 issu de la différence entre le code C2 et le code C1 s'écrit :
0 ; -1 ; +1 ; 0 ; -1 ; 0 ; 0 ; +1

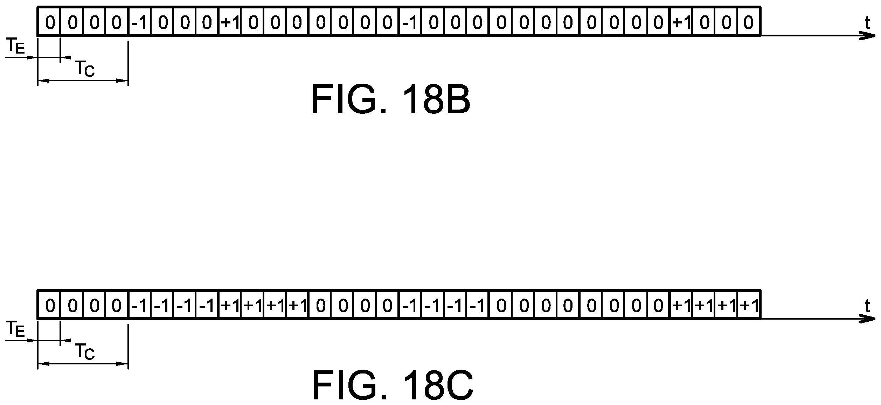

Le code C3 obtenu est un code ternaire. Les figures 18B et 18C représentent deux exemples de séquence de corrélation formées à partir du code C3. Dans l'exemple de la figure 18B, la durée d'étalement des données de la séquence R est égale à $1/f_E$ et dans l'exemple de la figure 18C, la durée d'étalement des données de la séquence R est égale à $1/f_C$. Un avantage de cette modification est de pouvoir effectuer la corrélation glissante du signal avec une séquence de corrélation en langage ternaire (+1, -1, 0). Cela allège considérablement la complexité du corrélateur et cela rend plus robuste l'estimation des seuils de décision qui ne dépend pas alors du niveau de bruit et d'interférences, contrairement aux cas de corrélation en dynamique élevée.

Dans la description ci-dessus, il est mentionné que la durée d'étalement des données d'une séquence de corrélation R peut varier de $T_C/K$ à $T_C$ (K=$f_E/f_C$) . Cette modulation de la durée des données qui composent une séquence de corrélation constitue un filtrage numérique passe-bas dont la fréquence de coupure peut varier de $1/T_C$ à $K/T_C$. Il faut ici noter que l'invention concerne d'autres modes de réalisation pour lesquels le filtrage passe-bas n'est pas réalisé au niveau de la séquence de corrélation, mais ailleurs au niveau du récepteur ultra large bande. Une opération de filtrage passe-bas peut ainsi être effectuée, par exemple, soit sur les données échantillonnées de la portion P(E) du signal reçu, soit sur les signaux issus de l'opération de corrélation.

REFERENCES BIBLIOGRAPHIQUES

[1] FCC, "First report and Order", FCC 02-48, Feb 14, 2002

[2] M. Z. Win and R. A. Scholtz, "Impulse radio How it works", IEEE Comm. Letters, Vol. 2, no. 2, pp. 36-38, February 1998

[3] "d2P802-15-4a Draft Standard", IEEE 802.1 5.4a drafting document

[4] L. Stoica, A. Rabbachin, L Oppermann, "A Low-Complexity Noncoherent IR-UWB Transceiver Architecture With TOA Estimation ", MTT 2006, Volume 54

[5] Sung-Yoon Jung, Dong-Jo Park, "Design of Preamble Signal for Synchronization with UWB Non-C Energy Détection Receiver"

[6] A. Rabbachin, L Oppermann, "Synchronization Analysis for UWB 5 with a Low Complexity Energy Collection Receiver".

**Revendications**

1. Procédé de traitement, dans un récepteur ultra-large bande, d'un signal reçu redressé échantillonné à une fréquence $f_E$, comprenant au moins une corrélation glissante (5) entre une sélection (P(E)) du signal reçu redressé échantillonné (E) et une séquence de corrélation (R), la séquence de corrélation (R) étant constituée d'au moins une séquence de corrélation élémentaire de durée $T_S$ égale à la durée d'une séquence S d'un signal émis qui correspond au signal reçu et constituée de données se succédant à une fréquence $f_C$ telle que $f_C$=$f_E/k$, k étant un nombre entier supérieur ou égal à 1, une donnée de séquence de corrélation élémentaire correspondant de manière univoque à une donnée d'un code d'émission utilisé pour former la séquence S et ayant une durée d'étalement comprise entre $1/f_E$ et $1/f_C$, la corrélation glissante consistant à effectuer une succession de n étapes de corrélation élémentaires, n étant un entier supérieur ou égal à 2, à une fréquence f inférieure ou égale à $f_E$ et supérieure ou égale à $f_c$, le procédé comprenant, pour chaque sélection du signal reçu :

- une étape de corrélation élémentaire consistant à effectuer une opération de corrélation entre la sélection considérée (P(E)) du signal reçu ultra-large bande redressé échantillonné et la séquence de corrélation (R), pour fournir une suite d'échantillons de corrélation intermédiaires, et

- une somme (6) des échantillons de corrélation intermédiaires fournis pour obtenir un échantillon de corrélation élémentaire unique,

les n échantillons de corrélation élémentaires obtenus constituant un premier vecteur de corrélation (V, V1, V2).

**2.** Procédé de traitement selon la revendication 1, dans lequel chacun des n échantillons de corrélation est comparé à une valeur de seuil (7), de telle sorte que le premier vecteur de corrélation (V, V1, V2) n'est formé que des échantillons de corrélation dont la valeur est supérieure au seuil.

**3.** Procédé de traitement selon la revendication 1 ou 2, dans lequel, la fréquence f de corrélation étant sensiblement égale à $f_C$, les positions temporelles relatives de m échantillons de corrélation successifs du vecteur de corrélation (V1) sont analysées, m étant un entier supérieur ou égal à 2, de telle sorte qu'une synchronisation grossière du signal reçu ultra-large bande redressé échantillonné est considérée comme effectuée dès lors qu'au moins deux échantillons de corrélation successifs du premier vecteur de corrélation (V1) sont sensiblement séparés de la durée $T_S$, la position temporelle $T_{synchro}$ du dernier des m échantillons de corrélation étant alors considérée comme un instant d'arrivée approximatif d'une séquence S.

**4.** Procédé de traitement selon la revendication 3 dans lequel, entre des instants $T_{synchro}$-$T_C$ et $T_{synchro}$+$T_C$, est effectuée une deuxième corrélation glissante consistant à effectuer une succession de x deuxièmes étapes de corrélation élémentaires, x étant un entier supérieur ou égal à 2, à une fréquence de corrélation sensiblement égale à $f_E$, entre une séquence S ultérieure à la séquence S ayant servi à déterminer la position temporelle $T_{synchro}$ et une séquence de corrélation (R) dont les données ont une durée d'étalement sensiblement égale à $1/f_E$, une deuxième étape de corrélation élémentaire produisant une suite de deuxièmes échantillons de corrélation intermédiaires, et dans lequel les étapes suivantes sont effectuées :

- somme des deuxièmes échantillons de corrélation intermédiaires délivrés par chacune des x deuxièmes étapes de corrélation élémentaires pour former y deuxièmes échantillons de corrélation,

- formation d'un deuxième vecteur de corrélation (V4) construit à partir de chacun des y deuxièmes échantillons de corrélation successifs, la position temporelle de l'échantillon de corrélation du deuxième vecteur de corrélation pour laquelle l'échantillon de corrélation a une valeur maximale étant considéré comme un instant d'arrivée précis d'une séquence S, et

- rafraîchissement de la position temporelle $T_{synchro}$ sur la base de la position temporelle considérée comme l'instant d'arrivée précis de la séquence S.

**5.** Procédé de traitement selon la revendication 1 ou 2, dans lequel, la fréquence f de corrélation étant sensiblement égale à $f_E$ :

- le premier vecteur de corrélation (V2) est échantillonné à la fréquence $f_C$ de façon à obtenir un vecteur de corrélation échantillonné (V3), et

- les positions temporelles relatives de m échantillons de corrélation successifs du vecteur de corrélation échantillonné (V3) sont analysées, m étant un entier supérieur ou égal à 2, de telle sorte que la synchronisation grossière est considérée comme effectuée dès lors qu'au moins deux échantillons de corrélation successifs du vecteur de corrélation échantillonné (V3) sont sensiblement séparés de la durée $T_S$, la position temporelle $T_{synchro}$ du dernier des m échantillons de corrélation étant alors considérée comme un instant d'arrivée approximatif d'une séquence S.

**6.** Procédé de traitement selon la revendication 5, dans lequel est effectuée une recherche du maximum du premier vecteur de corrélation (v2) entre les instants $T_{synchro}$-$T_C$ et $T_{synchro}$+$T_C$, la position temporelle de l'échantillon de corrélation du premier vecteur de corrélation (V2) pour laquelle l'échantillon de corrélation a une valeur maximale étant considéré comme un instant d'arrivée précis d'une séquence S, un rafraîchissement de la position temporelle $T_{synchro}$ étant alors effectué sur la base de la position temporelle considérée comme l'instant d'arrivée précis d'une séquence S.

**7.** Procédé de traitement selon l'une quelconque des revendications 3 à 6, dans lequel la durée d'étalement des données de séquence de corrélation élémentaire est sensiblement égale à $1/f_C$.

**8.** Procédé de traitement selon l'une quelconque des revendications 4, 6, ou 7 lorsque la revendication 7 dépend de la revendication 4 ou 6 tel que, lorsque la position temporelle $T_{synchro}$ a été rafraîchie, à l'arrivée de chaque nouvelle séquence S, entre un instant $T_{synchro}$ - Ta et un instant $T_{synchro}$ + Ta :

- une étape de corrélation glissante supplémentaire, à une fréquence f sensiblement égale à $f_E$, entre le signal reçu redressé échantillonné à la fréquence $f_E$ et une séquence de corrélation (R) dont les données de séquence de corrélation élémentaire ont une durée d'étalement sensiblement égale à $1/f_E$, pour obtenir des échantillons de corrélation élémentaires supplémentaires pour chaque séquence S,
- une somme, pour chaque séquence S, des échantillons de corrélation élémentaires supplémentaires pour former des échantillons de corrélation supplémentaires qui constituent un troisième vecteur de corrélation (V5),
- une recherche de la position temporelle du maximum de corrélation pour chaque troisième vecteur de corrélation (V5), et
- une analyse de la position du maximum de corrélation dans chaque troisième vecteur de corrélation de telle sorte que, si le maximum de corrélation se situe sensiblement à la même position dans chaque troisième vecteur de corrélation, il est considéré qu'un signal d'horloge qui pilote l'échantillonnage du signal ultra-large bande reçu ne dérive pas ou, sinon, il est considéré que ledit signal d'horloge dérive.

9. Procédé de traitement selon la revendication 8, dans lequel chacun des seconds échantillons de corrélation est comparé à une valeur de seuil, de telle sorte que le troisième vecteur de corrélation n'est formé que des seconds échantillons de corrélation dont la valeur est supérieure au seuil.

10. Procédé de traitement selon la revendication 8 ou 9, dans lequel, lorsqu'il est considéré que le signal d'horloge dérive, une correction du signal d'horloge est effectuée sur la base de la pente d'une droite qui représente la variation, en fonction du temps, du maximum de corrélation.

11. Procédé de traitement selon l'une des revendications 8 à 10, qui comprend les étapes suivantes :

- constitution d'un vecteur de maxima de corrélation (V6) à partir des maxima de corrélation de chaque troisième vecteur de corrélation (V5),
- corrélation glissante entre les composantes du vecteur de maxima de corrélation et une séquence de référence de début de trame (KD), la corrélation glissante consistant à effectuer une succession de n étapes de corrélation élémentaires de début de trame, n étant un nombre entier supérieur ou égal à 2, à une fréquence 1/Ts, entre les composantes du vecteur de maxima de corrélation et la séquence de référence de début de trame (KD), la séquence de référence de début de trame (KD) ayant une durée égale à la durée d'une séquence de délimitation de début de trame (D) et étant constituée de valeurs binaires définies conformément aux mots qui constituent les données de la séquence de délimitation de début de trame (D) de telle sorte qu'une valeur binaire de séquence de référence de début de trame (D) prend une première valeur (1) lorsqu'un mot de la séquence de délimitation de début de trame (D) a une valeur non nulle et une deuxième valeur (-1) lorsqu'un mot de la séquence de délimitation de début de trame (D) a une valeur nulle,
- somme des échantillons (7) issus de chaque opération de corrélation élémentaire de début de trame pour délivrer une succession de sommes élémentaires de début de trame (V7),
- sélection par seuil (12) des sommes élémentaires de début de trame pour sélectionner les sommes élémentaires de début de trame dont la valeur est supérieure à un seuil,
- détermination de l'instant de début de trame, par la position temporelle de la somme élémentaire de début de trame dont la valeur dépasse le seuil.

12. Procédé selon la revendication 1 ou 2, **caractérisé en ce que**, à l'arrivée de chaque séquence S, l'étape de corrélation glissante est une corrélation entre la séquence S et la séquence de corrélation (R) pour obtenir des échantillons de corrélation élémentaires relatifs à chaque séquence S, et **en ce qu'**il comprend les étapes suivantes :

- une somme, pour chaque séquence S, des échantillons de corrélation élémentaires pour former des seconds échantillons de corrélation qui constituent un second vecteur de corrélation (V5),
- une recherche de la position temporelle du maximum de corrélation pour chaque second vecteur de corrélation, et
- une analyse de la position du maximum de corrélation dans chaque second vecteur de corrélation de telle sorte que, si le maximum de corrélation se situe sensiblement à la même position dans chaque second vecteur de corrélation, il est considéré qu'un signal d'horloge qui pilote l'échantillonnage du signal ultra-large bande reçu ne dérive pas ou, sinon, il est considéré que ledit signal d'horloge dérive.

13. Procédé de traitement selon la revendication 12, dans lequel chacun des seconds échantillons de corrélation est comparé à une valeur de seuil, de telle sorte que le second vecteur de corrélation n'est formé que des seconds échantillons de corrélation dont la valeur est supérieure au seuil.

**14.** Procédé de traitement selon la revendication 12 ou 13, dans lequel, lorsqu'il est considéré que le signal d'horloge dérive, une correction du signal d'horloge est effectuée sur la base de la pente d'une droite qui représente la variation, en fonction du temps, du maximum de corrélation.

**15.** Procédé de traitement selon la revendication 1 ou 2, **caractérisé en ce qu'**il comprend les étapes suivantes :

- constitution d'un vecteur de maxima de corrélation à partir des maxima de corrélation de chaque vecteur de corrélation,
- corrélation glissante entre les composantes du vecteur de maxima de corrélation et une séquence de référence de début de trame (KD), la corrélation glissante consistant à effectuer une succession de n étapes de corrélation élémentaires de début de trame, n étant une nombre entier supérieur ou égal à 2, à une fréquence 1/Ts, entre les composantes du vecteur de maxima de corrélation et la séquence de référence de début de trame (KD), la séquence de référence de début de trame (KD) ayant une durée égale à la durée d'une séquence de délimitation de début de trame (D) et étant constituée de valeurs binaires définies conformément aux mots qui constituent les données de la séquence de délimitation de début de trame (D) de telle sorte qu'une valeur binaire de séquence de référence de début de trame (D) prend une première valeur (1) lorsqu'un mot de la séquence de délimitation de début de trame (D) a une valeur non nulle et une deuxième valeur (-1) lorsqu'un mot de la séquence de délimitation de début de trame (D) a une valeur nulle,
- somme des échantillons issus de chaque opération de corrélation élémentaire de début de trame pour délivrer une succession de sommes élémentaires de début de trame,
- sélection par seuil des sommes élémentaires de débute de trame pour sélectionner les sommes élémentaires de début de trame dont la valeur est supérieure à un seuil,
- détermination de l'instant de début de trame, par la position temporelle de la somme élémentaire de début de trame dont la valeur dépasse le seuil.

**16.** Procédé de traitement selon la revendication 1 ou 2 dans lequel la corrélation glissante comprend les étapes suivantes :

- multiplication entre une séquence S sélectionnée à partir du signal reçu redressé échantillonné (E) et une séquence de corrélation (R) dont la durée d'étalement des données est sensiblement égale à $1/f_C$,
- découpe du signal issu de la multiplication en portions de signal de durée $T_C$,
- somme, échantillon par échantillon, des portions de signal de durée $T_C$,
- sélection par seuil du résultat de la somme des portions de signal de durée $T_C$ pour ne conserver le résultat de la somme des portions de signal de durée $T_C$ que si ce dernier est supérieur au seuil,
- quantification sur un bit du signal issu de la sélection par seuil du résultat de la somme des portions de signal de durée $T_C$,
- formation d'un vecteur d'estimation de canal (W) à partir de signaux issus de la quantification.

**17.** Procédé de traitement selon la revendication 1 ou 2, dans lequel la corrélation glissante est une corrélation glissante entre une séquence S sélectionnée à partir du signal reçu redressé échantillonné (E) et une séquence de corrélation (R) dont la durée d'étalement des données est sensiblement égale à $1/f_E$, le premier vecteur de corrélation constituant un vecteur d'estimation de canal (V).

**18.** Procédé de traitement selon la revendication 16 ou 17, dans lequel les données de signal qui constituent le vecteur d'estimation de canal (V, W) sont utilisées pour modifier les données qui constituent la séquence de corrélation (R).

**19.** Procédé de traitement selon l'une des revendications 16 à 18, dans lequel le signal ultra-large bande échantillonné reçu pendant une durée ($T_{symbol}$) égale à une durée d'un symbole de trame est divisé en N tranches d'échantillons de signal dont chacune est corrélée avec le vecteur d'estimation de canal (V, W) de façon à délivrer N ensembles d'échantillons de corrélation de symbole, les échantillons de chacun des N ensembles d'échantillons de corrélation de symbole étant sommés pour former N sommes d'échantillons de symboles, les N sommes d'échantillons de symboles étant ensuite comparées entre elles, la somme dont la valeur est la plus élevée donnant la position temporelle d'une impulsion dans la durée du symbole et, en conséquence, la valeur du symbole transmis.

**20.** Procédé de traitement selon l'une quelconque des revendications précédentes dans lequel une séquence de corrélation (R) est une séquence de corrélation binaire dont les données prennent des valeurs +1 ou 0, la valeur +1 étant associée à une valeur +1 ou -1 d'un code ternaire d'émission sur la base duquel est constituée une séquence S d'émission et la valeur 0 étant associée à une valeur 0 du code ternaire d'émission.

21. Procédé de traitement selon l'une quelconque des revendications 1 à 19 dans lequel une séquence de corrélation (R) est une séquence de corrélation binaire dont les données prennent des valeurs +1 ou -1, la valeur +1 étant associée à une valeur +1 ou -1 d'un code ternaire d'émission sur la base duquel est constituée une séquence S d'émission et la valeur -1 étant associée à une valeurs 0 du code ternaire d'émission.

22. Procédé de traitement selon l'une quelconque des revendications 1 à 20 dans lequel :

   - une séquence de corrélation (R) est une séquence de corrélation ternaire dont les données prennent des valeurs +1, 0 ou -1 et sont formées à partir de la différence entre une première séquence de corrélation, binaire et une deuxième séquence de corrélation binaire, la première séquence de corrélation binaire étant constituée de données dont les valeurs prennent, à un instant $t_o$, des valeurs +1 ou 0, la valeur +1 étant associée à une valeur +1 ou -1 d'un code ternaire d'émission sur la base duquel est constituée une séquence S d'émission et la valeur 0 étant associée à une valeur 0 du code ternaire d'émission, et la deuxième séquence de corrélation binaire étant constituée de données dont les valeurs sont, à l'instant $t_o$, les valeurs des données qui constituent la première séquence de corrélation binaire à l'instant $t_o-1/f_C$, et
   - la sélection (P(E)) du signal reçu redressé échantillonné est formée à partir de la différence entre une première fraction du signal reçu redressé échantillonné prélevée à un instant $t_1$ et une deuxième fraction du signal reçu redressé échantillonné prélevée à un instant $t_1-1/f_C$.

**Patentansprüche**

1. Verfahren zur Verarbeitung, in einem Ultrabreitbandempfänger, eines gleichgerichteten empfangenen Signals, das mit einer Frequenz $f_E$ abgetastet ist, umfassend wenigstens eine gleitende Korrelation (5) zwischen einer Auswahl (P(E)) des abgetasteten gleichgerichteten empfangenen Signals (E) und einer Korrelationssequenz (R), wobei die Korrelationssequenz (R) gebildet ist durch wenigstens eine Elementarkorrelationssequenz mit einer Dauer $T_S$ gleich der Dauer einer Sequenz S eines ausgesandten Signals, das dem empfangenen Signal entspricht und durch Daten gebildet ist, die mit einer Frequenz $f_C$ derart aufeinander folgen, dass $f_C = f_E/k$, wobei k eine ganze Zahl größer oder gleich 1 ist, wobei eine Dateneinheit der Elementarkorrelationssequenz in eindeutiger Weise einer Dateneinheit eines Sendecodes entspricht, der verwendet wird, um die Sequenz S zu bilden und eine Spreizungsdauer hat, die zwischen $1/f_E$ und $1/f_C$ enthalten ist, wobei die gleitende Korrelation darin besteht, eine Folge von n Elementarkorrelationsschritten durchzuführen, wobei n eine ganze Zahl größer oder gleich 2 ist, bei einer Frequenz f kleiner oder gleich $f_E$ und größer oder gleich $f_C$, wobei das Verfahren für jede Auswahl des empfangenen Signals umfasst:

   - einen Elementarkorrelationsschritt, der darin besteht, eine Korrelationsoperation durchzuführen zwischen der betrachteten Auswahl (P(E)) des abgetasteten gleichgerichteten empfangenen Ultrabreitbandsignals und der Korrelationssequenz (R), um eine Folge von Zwischenkorrelationsabtastwerten zu liefern, und
   - eine Summierung (6) der gelieferten Zwischenkorrelationsabtastwerte, um einen einzigen Elementarkorrelationsabtastwert zu erhalten,

wobei die erhaltenen n Elementarkorrelationsabtastwerte einen ersten Korrelationsvektor (V, V1, V2) bilden.

2. Verarbeitungsverfahren nach Anspruch 1, bei dem jeder der n Korrelationsabtastwerte mit einem Schwellenwert (7) derart verglichen wird, dass der erste Korrelationsvektor (V, V1, V2) nur aus Korrelationsabtastwerten gebildet ist, deren Wert größer als die Schwelle ist.

3. Verarbeitungsverfahren nach Anspruch 1 oder 2, bei dem die Korrelationsfrequenz f im Wesentlichen gleich $f_C$ ist, wobei die relativen zeitlichen Positionen von m aufeinanderfolgenden Korrelationsabtastwerten des Korrelationsvektors (V1) analysiert werden, wobei m eine ganze Zahl größer oder gleich 2 ist, derart, dass eine grobe Synchronisation des empfangenen abgetasteten gleichgerichteten Ultrabreitbandsignals als durchgeführt angesehen wird, sobald wenigstens zwei aufeinanderfolgende Korrelationsabtastwerte des ersten Korrelationsvektors (V1) im Wesentlichen um die Dauer $T_S$ getrennt sind, wobei die zeitliche Position $T_{synchro}$ des letzten der m Korrelationsabtastwerte dann als ein ungefährer Ankunftszeitpunkt einer Sequenz S betrachtet wird.

4. Verarbeitungsverfahren nach Anspruch 3, bei dem zwischen Zeitpunkten $T_{synchro}-T_C$ und $T_{synchro}+T_C$ eine zweite gleitende Korrelation durchgeführt wird, die darin besteht, eine Folge von x zweiten Elementarkorrelationsschritten durchzuführen, wobei x eine ganze Zahl größer oder gleich 2 ist, bei einer Korrelationsfrequenz im Wesentlichen gleich $f_E$, zwischen einer Sequenz S nach der Sequenz S, die dazu gedient hat, die zeitliche Position $T_{synchro}$ zu bestimmen, und einer Korrelationssequenz (R), deren Daten eine Spreizungsdauer im Wesentlichen gleich $1/f_E$ haben, wobei ein zweiter Elementarkorrelationsschritt eine Folge von zweiten Zwischenkorrelationsabtastwerten erzeugt, und wobei die folgenden Schritte durchgeführt werden:

- Summieren der zweiten Zwischenkorrelationsabtastwerte, geliefert durch jeden der x zweiten Elementarkorrelationsschritte, um y zweite Korrelationsabtastwerte zu bilden,
- Bilden eines zweiten Korrelationsvektors (V4), der ausgehend von jedem der aufeinanderfolgenden y zweiten Korrelationsabtastwerte erstellt ist, wobei die zeitliche Position des Korrelationsabtastwerts des zweiten Korrelationsvektors für jeden Korrelationsabtastwert einen maximalen Wert hat, der als ein genauer Ankunftszeitpunkt einer Sequenz S betrachtet wird, und
- Aktualisieren der zeitlichen Position $T_{synchro}$ auf Basis der zeitlichen Position, die als der genaue Ankunftszeitpunkt der Sequenz S betrachtet wird.

5. Verarbeitungsverfahren nach Anspruch 1 oder 2, bei dem die Korrelationsfrequenz f im Wesentlichen gleich $f_E$ ist, und:

- der erste Korrelationsvektor (V2) mit der Frequenz $f_C$ derart abgetastet wird, dass ein abgetasteter Korrelationsvektor (V3) erhalten wird, und
- die relativen zeitlichen Positionen von m aufeinanderfolgenden Korrelationsabtastwerten des abgetasteten Korrelationsvektors (V3) analysiert werden, wobei m eine ganze Zahl größer oder gleich 2 ist, derart, dass die grobe Synchronisation als durchgeführt betrachtet wird, sobald wenigstens zwei aufeinanderfolgende Korrelationsabtastwerte des abgetasteten Korrelationsvektors (V3) im Wesentlichen um die Dauer $T_S$ getrennt sind, wobei die zeitliche Position $T_{synchro}$ des letzten der m Korrelationsabtastwerte dann als ein ungefährer Ankunftszeitpunkt einer Sequenz S betrachtet wird.

6. Verarbeitungsverfahren nach Anspruch 5, bei dem eine Suche des Maximums des ersten Korrelationsvektors (V2) durchgeführt wird zwischen den Zeitpunkten $T_{synchro}-T_C$ und $T_{synchro}+T_C$, wobei die zeitliche Position des Korrelationsabtastwerts des ersten Korrelationsvektors (V2), für den der Korrelationsabtastwert einen maximalen Wert hat, als ein genauer Ankunftszeitpunkt einer Sequenz S betrachtet wird, wobei eine Aktualisierung der zeitlichen Position $T_{synchro}$ dann auf der Basis der zeitlichen Position durchgeführt wird, die als der genaue Ankunftszeitpunkt einer Sequenz S betrachtet wird.

7. Verarbeitungsverfahren nach einem der Ansprüche 3 bis 6, bei dem die Spreizungsdauer der Daten der Elementarkorrelationssequenz im Wesentlichen gleich $1/f_C$ ist.

8. Verarbeitungsverfahren nach einem der Ansprüche 4, 6 oder 7, wenn Anspruch 7 von Anspruch 4 oder 6 abhängt, derart, dass es, wenn die zeitliche Position $T_{synchro}$ aktualisiert worden ist, bei der Ankunft jeder neuen Sequenz S zwischen einem Zeitpunkt $T_{synchro}-Ta$ und einem Zeitpunkt $T_{synchro}+Ta$ umfasst:

- einen zusätzlichen Schritt einer gleitenden Korrelation bei einer Frequenz f im Wesentlichen gleich $f_E$ zwischen dem gleichgerichteten empfangenen Signal, abgetastet mit der Frequenz $f_E$, und einer Korrelationssequenz (R), deren Daten der Elementarkorrelationssequenz eine Spreizungsdauer im Wesentlichen gleich $1/f_E$ haben, um zusätzliche Elementarkorrelationsabtastwerte für jede Sequenz S zu erhalten,
- eine Summierung, für jede Sequenz S, der zusätzlichen Elementarkorrelationsabtastwerte, um zusätzliche Korrelationsabtastwerte zu bilden, die einen dritten Korrelationsvektor (V5) bilden,
- eine Suche nach der zeitlichen Position des Korrelationsmaximums für jeden dritten Korrelationsvektor (V5), und
- eine Analyse der Position des Korrelationsmaximums in jedem dritten Korrelationsvektor derart, dass dann, wenn sich das Korrelationsmaximum in jedem dritten Korrelationsvektor im Wesentlichen an der gleichen Position befindet, angenommen wird, dass ein Taktsignal, das die Abtastung des empfangenen Ultrabreitbandsignals steuert, nicht abweicht, oder andernfalls angenommen wird, dass das Taktsignal abweicht.

9. Verarbeitungsverfahren nach Anspruch 8, bei dem jeder der zweiten Korrelationsabtastwerte mit einem Schwellenwert derart verglichen wird, dass der dritte Korrelationsvektor nur aus zweiten Korrelationsabtastwerten gebildet ist, deren Wert größer als die Schwelle ist.

10. Verarbeitungsverfahren nach Anspruch 8 oder 9, bei dem dann, wenn angenommen wird, dass das Taktsignal abweicht, eine Korrektur des Taktsignals auf Basis der Steigung einer Geraden durchgeführt wird, die die Variation des Korrelationsmaximums als Funktion der Zeit repräsentiert.

11. Verarbeitungsverfahren nach einem der Ansprüche 8 bis 10, das die folgenden Schritte umfasst:

- Erstellen eines Vektors von Korrelationsmaxima (V6) ausgehend von den Korrelationsmaxima jedes dritten Korrelationsvektors (V5),
- gleitende Korrelation zwischen den Komponenten des Vektors der Korrelationsmaxima und einer Frameanfangsreferenzsequenz (KD), wobei die gleitende Korrelation darin besteht, eine Folge von n Frameanfangselementarkorrelationsschritten durchzuführen, wobei n eine ganze Zahl größer oder gleich 2 ist, bei einer Frequenz 1/Ts, zwischen den Komponenten des Vektors der Korrelationsmaxima und der Frameanfangsreferenzsequenz (KD), wobei die Frameanfangsreferenzsequenz (KD) eine Dauer gleich der Dauer einer Frameanfangsbegrenzungssequenz (D) hat und durch binäre Werte gebildet ist, die entsprechend den Wörtern definiert sind, die die Daten der Frameanfangsbegrenzungssequenz (D) bilden, derart, dass ein binärer Wert der Frameanfangsreferenzsequenz (D) einen ersten Wert (1) annimmt, wenn ein Wort der Frameanfangsbegrenzungssequenz (D) einen Wert ungleich Null hat, und einen zweiten Wert (-1), wenn ein Wort der Frameanfangsbegrenzungssequenz (D) einen Wert von Null hat,
- Summieren der Abtastwerte (7), die von jeder Frameanfangselementarkorrelationsoperation stammen, um eine Folge von Frameanfangselementarsummen (V7) zu liefern,
- Schwellenauswahl (12) der Frameanfangselementarsummen, um die Frameanfangselementarsummen auszuwählen, deren Wert größer als eine Schwelle ist,
- Bestimmen des Frameanfangszeitpunkts durch die zeitliche Position der Frameanfangselementarsumme, deren Wert die Schwelle übersteigt.

12. Verfahren nach Anspruch 1 oder 2, **dadurch gekennzeichnet, dass** bei der Ankunft jeder Sequenz S der Schritt der gleitenden Korrelation eine Korrelation ist zwischen der Sequenz S und der Korrelationssequenz (R), um Elementarkorrelationsabtastwerte bezüglich jeder Sequenz S zu erhalten, und dass es die folgenden Schritte umfasst:

- eine Summierung, für jede Sequenz S, der Elementarkorrelationsabtastwerte, um zweite Korrelationsabtastwerte zu bilden, die einen zweiten Korrelationsvektor (V5) bilden,
- eine Suche nach der zeitlichen Position des Korrelationsmaximums für jeden zweiten Korrelationsvektor, und
- eine Analyse der Position des Korrelationsmaximums in jedem zweiten Korrelationsvektor derart, dass dann, wenn das Korrelationsmaximum sich im Wesentlichen an der gleichen Position in jedem zweiten Korrelationsvektor befindet, angenommen wird, dass ein Taktsignal, das die Abtastung des empfangenen Ultrabreitbandsignals steuert, nicht abweicht, oder andernfalls angenommen wird, dass das Taktsignal abweicht.

13. Verarbeitungsverfahren nach Anspruch 12, bei dem jeder der zweiten Korrelationsabtastwerte mit einem Schwellenwert derart verglichen wird, dass der zweite Korrelationsvektor nur aus zweiten Korrelationsabtastwerten gebildet ist, deren Wert größer als die Schwelle ist.

14. Verarbeitungsverfahren nach Anspruch 12 oder 13, bei dem dann, wenn angenommen wird, dass das Taktsignal abweicht, eine Korrektur des Taktsignals auf Basis der Steigung einer Geraden durchgeführt wird, die die Variation des Korrelationsmaximums als Funktion der Zeit repräsentiert.

15. Verarbeitungsverfahren nach Anspruch 1 oder 2, **dadurch gekennzeichnet, dass** es die folgenden Schritte umfasst:

- Erstellen eines Vektors von Korrelationsmaxima ausgehend von den Korrelationsmaxima jedes Korrelationsvektors,
- gleitende Korrelation zwischen den Komponenten des Vektors der Korrelationsmaxima und einer Frameanfangsreferenzsequenz (KD), wobei die gleitende Korrelation darin besteht, eine Folge von n Frameanfangselementarkorrelationsschritten durchzuführen, wobei n eine ganze Zahl größer oder gleich 2 ist, bei einer Frequenz 1/Ts, zwischen den Komponenten des Vektors der Korrelationsmaxima und der Frameanfangsreferenzsequenz (KD), wobei die Frameanfangsreferenzsequenz (KD) eine Dauer gleich der Dauer einer Frameanfangsbegrenzungssequenz (D) hat und gebildet ist durch binäre Werte, die entsprechend den Worten definiert sind, die die Daten der Frameanfangsbegrenzungssequenz (D) bilden, derart, dass ein binärer Wert der Frameanfangsreferenzsequenz (D) einen ersten Wert (1) annimmt, wenn ein Wort der Frameanfangsbegrenzungssequenz (D) einen Wert ungleich Null hat, und einen zweiten Wert (-1), wenn ein Wort der Frameanfangsbegrenzungssequenz (D) einen Wert von Null hat,
- Summieren der Abtastwerte, die von jeder Frameanfangselementarkorrelationsoperation stammen, um eine Folge von Frameanfangselementarsummen zu liefern,
- Schwellenauswahl der Frameanfangselementarsummen, um die Frameanfangselementarsummen auszuwählen, deren Wert größer als eine Schwelle ist,

- Bestimmen des Frameanfangszeitpunkts durch die zeitliche Position der Frameanfangselementarsumme, deren Wert die Schwelle übersteigt.

16. Verarbeitungsverfahren nach Anspruch 1 oder 2, bei dem die gleitende Korrelation die folgenden Schritte umfasst:

- Multiplikation zwischen einer Sequenz S, die ausgehend von dem abgetasteten gleichgerichteten empfangenen Signal (E) ausgewählt ist, und einer Korrelationssequenz (R), deren Spreizungsdauer der Daten im Wesentlichen gleich $1/f_C$ ist,
- Schneiden des aus der Multiplikation stammenden Signals in Signalbereiche der Dauer $T_C$,
- Summieren der Signalbereiche der Dauer $T_C$ Abtastwert für Abtastwert,
- Schwellenauswahl des Ergebnisses der Summierung der Signalbereiche der Dauer $T_C$, um das Ergebnis der Summierung der Signalbereiche der Dauer $T_C$ nur dann zu bewahren, wenn dieses letztere größer als die Schwelle ist,
- Quantisieren, auf ein Bit, des Signals, das aus der Schwellenauswahl des Ergebnisses der Summierung der Signalbereiche der Dauer $T_C$ stammt,
- Bilden eines Kanalabschätzvektors (W) ausgehend von den Signalen, die aus der Quantisierung stammen.

17. Verarbeitungsverfahren nach Anspruch 1 oder 2, bei dem die gleitende Korrelation eine gleitende Korrelation ist zwischen einer Sequenz S, die ausgehend von dem abgetasteten gleichgerichteten empfangenden Signal (E) ausgewählt ist, und einer Korrelationssequenz (R), deren Spreizungsdauer der Daten im Wesentlichen gleich $1/f_E$ ist, wobei der erste Korrelationsvektor einen Kanalabschätzvektor (V) bildet.

18. Verarbeitungsverfahren nach Anspruch 16 oder 17, bei dem die Signaldaten, die den Kanalabschätzvektor (V, W) bilden, dazu verwendet werden, die Daten zu modifizieren, die die Korrelationssequenz (R) bilden.

19. Verarbeitungsverfahren nach einem der Ansprüche 16 bis 18, bei dem das abgetastete Ultrabreitbandsignal, das während einer Dauer ($T_{symbol}$) gleich einer Dauer eines Framesymbols empfangen wird, geteilt wird in N Signalabtastwertscheiben, von denen jede mit dem Kanalabschätzvektor (V, W) derart korreliert wird, dass N Gruppen von Symbolkorrelationsabtastwerten geliefert werden, wobei die Abtastwerte von jeder der N Gruppen von Symbolkorrelationsabtastwerten summiert werden, um N Symbolabtastwertsummen zu bilden, wobei die N Symbolabtastwertsummen anschließend miteinander verglichen werden, wobei die Summe, deren Wert am höchsten ist, die zeitliche Position eines Pulses in der Symboldauer und als Konsequenz den Wert des übertragenen Symbols angibt.

20. Verarbeitungsverfahren nach einem der vorhergehenden Ansprüche, bei dem eine Korrelationssequenz (R) eine binäre Korrelationssequenz ist, deren Daten Werte +1 oder 0 annehmen, wobei der Wert +1 einem Wert +1 oder -1 eines ternären Sendecodes zugeordnet ist, auf dessen Basis eine Sendesequenz S gebildet ist, und der Wert 0 einem Wert 0 des ternären Sendecodes zugeordnet ist.

21. Verarbeitungsverfahren nach einem der Ansprüche 1 bis 19, bei dem eine Korrelationssequenz (R) eine binäre Korrelationssequenz ist, deren Daten Werte +1 oder -1 annehmen, wobei der Wert +1 einem Wert +1 oder -1 eines ternären Sendecodes zugeordnet ist, auf dessen Basis eine Sendesequenz S gebildet ist, und der Wert -1 einem Wert 0 des ternären Sendecodes zugeordnet ist.

22. Verarbeitungsverfahren nach einem der Ansprüche 1 bis 20, bei dem:

- eine Korrelationssequenz (R) eine ternäre Korrelationssequenz ist, deren Daten Werte +1, 0 oder -1 annehmen und gebildet sind ausgehend von der Differenz zwischen einer ersten binären Korrelationssequenz und einer zweiten binären Korrelationssequenz, wobei die erste binäre Korrelationssequenz durch Daten gebildet ist, deren Werte zu einem Zeitpunkt $t_0$ Werte +1 oder 0 annehmen, wobei der Wert +1 einem Wert +1 oder -1 eines ternären Sendecodes zugeordnet ist, auf dessen Basis eine Sendesequenz S gebildet ist, und der Wert 0 einem Wert 0 des ternären Sendecodes zugeordnet ist, und die zweite binäre Korrelationssequenz durch Daten gebildet ist, deren Werte zum Zeitpunkt $t_0$ die Werte der Daten sind, die die erste binäre Korrelationssequenz zum Zeitpunkt $t_0-1/f_C$ bilden, und
- die Auswahl (P(E)) des abgetasteten gleichgerichteten empfangenen Signals gebildet ist ausgehend von der Differenz zwischen einem ersten Teil des abgetasteten gleichgerichteten empfangenen Signals, erhoben zu einem Zeitpunkt $t_1$, und einem zweiten Teil des abgetasteten gleichgerichteten empfangenen Signals, erhoben zu einem Zeitpunkt $t_1-1/f_C$.

**Claims**

1. Method for processing, in an ultra-wide band receiver, a rectified received signal sampled at a frequency $f_E$, comprising at least one sliding correlation (5) between a selection (P(E)) of the sampled rectified received signal (E) and a correlation sequence (R), the correlation sequence (R) consisting of at least one elementary correlation sequence of duration $T_S$ equal to the duration of a sequence S of a transmitted signal which corresponds to the received signal and consisting of data which follow each other at a frequency $f_c$ such that $f_c = f_E/k$, k being an integer larger than or equal to 1, an elementary correlation sequence datum corresponding on a one-to-one basis to a datum of a transmission code used for forming the sequence S and having a spreading duration comprised between $1/f_E$ and $1/f_c$, the sliding correlation consisting of carrying out a succession of n elementary correlation steps, n being an integer larger than or equal to 2, at a frequency f less than or equal to $f_E$ and greater than or equal to $f_c$, the method comprising, for each selection of the received signal:

   - an elementary correlation step consisting of carrying out a correlation operation between the relevant selection (P(E)) of the sampled rectified ultra-wide band received signal and the correlation sequence (R) in order to provide a series of intermediate correlation samples, and
   - summation (6) of the intermediate correlation samples provided in order to obtain a single elementary correlation sample,

   the n elementary correlation samples obtained forming a first correlation vector (V, V1, V2).

2. The processing method according to claim 1, wherein each of the n correlation samples is compared to a threshold value (7), so that the first correlation vector (V, V1, V2) is only formed with the correlation samples, the value of which is above the threshold.

3. The processing method according to claim 1 or 2, wherein the correlation frequency f being substantially equal to $f_c$, the relative time positions of m successive correlation samples of the correlation vector (V1) are analyzed, m being an integer larger than or equal to 2, in such a way that rough synchronization of the sampled rectified ultra-wide band received signal is considered as achieved from the moment that at least two successive correlation samples of the first correlation vector (V1) are substantially separated by the duration $T_S$, the time position $T_{synchro}$ of the last of the m correlation samples then being considered as an approximate arrival instant of a sequence S.

4. The processing method according to claim 3 wherein, between instants $T_{synchro}$-$T_c$ and $T_{synchro}$+$T_c$, a second sliding correlation is carried out consisting of carrying out a succession of x second elementary correlation steps, x being an integer larger than or equal to 2, at a correlation frequency substantially equal to $f_E$, between a sequence S subsequent to the sequence S having being used for determining the time position $T_{synchro}$ and a correlation sequence (R), the data of which have a spreading duration substantially equal to $1/f_E$, a second elementary correlation step producing a series of second intermediate correlation samples, and wherein the following steps are carried out:

   - summing the second intermediate correlation samples delivered by each of the x second elementary correlation steps in order to form y second correlation samples,
   - forming of a second correlation vector (V4) built from each of the y second successive correlation samples, the time position of the correlation sample of the second correlation vector for which the correlation sample has maximum value, being considered as an accurate instant of arrival of a sequence S, and
   - refreshing the time position $T_{synchro}$ on the basis of the time position considered as the accurate instant of arrival of the sequence S.

5. The processing method according to claim 1 or 2, wherein the correlation frequency f being substantially equal to $f_E$:

   - the first correlation vector (V2) is sampled at frequency $f_c$ so as to obtain a sampled correlation vector (V3), and
   - the relative time positions of m successive correlation samples of the sampled correlation vector (V3) are analyzed, m being an integer larger than or equal to 2, so that rough synchronization is considered as carried out from the moment that at least two successive correlation samples of the sampled correlation vector (V3) are substantially separated by the duration $T_S$, the time position $T_{synchro}$ of the last of the m correlation samples then being considered as an approximate instant of arrival of a sequence S.

6. The processing method according to claim 5, wherein a search for the maximum of the first correlation vector (V2) is carried out between instants $T_{synchro}$-$T_c$ and $T_{synchro}$+$T_c$, the time position of the correlation sample of the first correlation vector (V2) for which the correlation sample has a maximum value being considered as an accurate instant of arrival of a sequence S, refreshing of the time position $T_{synchro}$ being then carried out on the basis of the time position considered as the accurate instant of arrival of a sequence S.

7. The processing method according to any of the claims 3 to 6, wherein the spreading duration of the elementary correlation sequence data is substantially equal to $1/f_c$.

8. The processing method according to claim 4, 6 or 7 when claim 7 depends on claim 4 or 6 such that, when the time position $T_{synchro}$ has been refreshed, upon arrival of each new sequence S, between an instant $T_{synchro}$ - Ta and an instant $T_{synchro}$ + Ta:

    - an additional sliding correlation step, at a frequency f substantially equal to $f_E$, between the rectified received signal sampled at frequency $f_E$ and a correlation sequence (R), the elementary correlation sequence data of which have a spreading duration substantially equal to $1/f_E$, in order to obtain additional elementary correlation samples for each sequence S,
    - summation, for each sequence S, of the additional elementary correlation samples in order to form additional correlation samples which form a third correlation vector (V5),
    - a search for the time position of the correlation maximum for each third correlation vector (V5), and
    - an analysis of the position of the correlation maximum in each third correlation vector so that, if the correlation maximum is substantially located at the same position in each third correlation vector, it is considered that a clock signal which controls the sampling of the received ultra-wide band signal is not drifting or, otherwise it is considered that said clock signal is drifting.

9. The processing method according to claim 8, wherein each of the second correlation samples is compared with a threshold value, so that the third correlation vector is only formed with the second correlation samples, for which the value is above the threshold.

10. The processing method according to claim 8 or 9, wherein when it is considered that the clock signal is drifting, a correction of the clock signal is carried out on the basis of the slope of a straight line which represents the variation over time of the correlation maximum.

11. The processing method according to any of the claims 8 to 10, which comprises the following steps:

    - forming a correlation maxima vector (V6) from the correlation maxima of each third correlation vector (V5),

    - a sliding correlation between the components of the correlation maxima vector and a start frame reference sequence (KD), the sliding correlation consisting of carrying out a succession of n start frame elementary correlation steps, n being an integer larger than or equal to 2, at a frequency 1/Ts, between the components of the correlation maxima vector and the start frame reference sequence(KD), the start frame reference sequence (KD) having a duration equal to the duration of a start frame delimitation sequence (D) and consisting of binary values defined according to the words which form the data of the start frame delimitation sequence (D) so that a binary value of the start frame reference sequence (D) assumes a first value (1) when a word of the start frame delimitation sequence (D) has a non-zero value and a second value (-1) when a word of the start frame delimitation sequence (D) has a zero value,
    - summation of the samples (7) from each start frame elementary correlation operation in order to deliver a succession of start frame elementary sums (V7),
    - selecting by threshold (12) start frame elementary sums in order to select the start frame elementary sums for which the value is above a threshold,
    - determining the start frame instant, by the time position of the start frame elementary sum, the value of which exceeds the threshold.

12. The method according to claim 1 or 2, **characterized in that**, upon the arrival of each sequence S, the sliding correlation step is a correlation between the sequence S and the correlation sequence (R) in order to obtain elementary correlation samples relating to each sequence S, and **in that** it comprises the following steps:

    - summation, for each sequence S, of the elementary correlation samples in order to form second correlation samples which form a second correlation vector (V5),
    - seeking the time position of the correlation maximum for each second correlation vector, and
    - analyzing the position of the correlation maximum in each second correlation vector so that, if the correlation maximum is substantially located at the same position in each second correlation vector, it is considered that a clock signal which controls the sampling of the received ultra-wide band signal is not drifting or, otherwise, it is considered that said clock signal is drifting.

13. The processing method according to claim 12, wherein each of the second correlation samples is compared with a threshold value, so that the second correlation vector is only formed by the second correlation samples, the value of which is above the threshold.

14. The processing method according to claim 12 or 13, wherein, when it is considered that the clock signal is drifting, a correction of the clock signal is carried out on the basis of the slope of a straight line which represents the variation over time of the correlation maximum.

15. The processing method according to claim 1 or 2, **characterized in that** it comprises the following steps:

- forming a correlation maxima vector from correlation maxima of each correlation vector,
- a sliding correlation between the components of the correlation maxima vector and a start frame reference sequence (KD), the sliding correlation consisting of carrying out a succession of n start frame elementary correlation steps, n being an integer larger than or equal to 2, at a frequency 1/Ts, between the components of the correlation maxima vector and the start frame reference sequence (KD), the start frame reference sequence (KD) having a duration equal to the duration of a start frame delimitation sequence (D) and consisting of binary values defined according to the words which make up the data of the start frame delimitation sequence (D) so that a start frame reference sequence binary value (D) assumes a first value (1) when a word of the start frame delimitation sequence (D) has a non-zero value and a second value (-1) when a word of the start frame delimitation sequence (D) has a zero value,
- summation of the samples from each start frame elementary correlation operation in order to deliver a succession of start frame elementary sums,
- selecting by threshold start frame elementary sums in order to select the start frame elementary sums, the value of which is above a threshold,
- determining the start frame instant, by the time position of the start frame elementary sum, the value of which exceeds the threshold.

16. The processing method according to claim 1 or 2, wherein the sliding correlation comprises the following steps:

- multiplication between a sequence S selected from the sampled rectified received signal (E) and a correlation sequence (R) whereof the spreading duration of the data is substantially equal to $1/f_c$,
- cutting the signal from the multiplication into signal portions of duration $T_c$,
- summation, sample per sample, of the signal portions or duration $T_c$,
- selecting by threshold the result of the sum of the signal portions of duration $T_c$ in order to only retain the result of the sum of the signal portions of duration $T_c$ if the latter is above the threshold,
- quantification on a bit of the signal from the selection by threshold of the result of the sum of the signal portions of duration $T_c$,
- forming a channel estimation vector (W) from signals resulting from the quantification.

17. The processing method according to claim 1 or 2, wherein the sliding correlation is a sliding correlation between a sequence S selected from the sampled rectified received signal (E) and a correlation sequence (R), whereof the spreading duration of the data is substantially equal to $1/f_E$, the first correlation vector forming a channel estimation vector (V) .

18. The processing method according to claim 16 or 17, wherein the signal data which form the channel estimation vector (V, W) are used for modifying the data which form the correlation sequence (R).

19. The processing method according to any of the claims 16 to 18, wherein the received sampled ultrawide band signal for a duration ($T_{symbol}$) equal to a duration of a frame symbol is divided into N sections of signal samples, each of which is correlated with the channel estimation vector (V, W) so as to deliver N symbol correlation sample sets, the samples of each of the N symbol correlation sample sets being summed in order to form N sums of symbol samples, the N symbol sample sums being then compared with each other, the sum for which the value is the highest giving the time position of a pulse in the duration of the symbol and accordingly the value of the transmitted symbol.

20. The processing method according to any of the preceding claims, wherein a correlation sequence (R) is a binary correlation sequence, the values of which assume the values +1 or 0, the value +1 being associated with a value +1 or -1 of a transmission ternary code on the basis of which a transmission sequence S is formed and the value 0 being associated with a value 0 of the transmission ternary code.

21. The processing method according to any of the claims 1 to 19, wherein a correlation sequence (R) is a binary correlation sequence, the data of which assume values +1 or -1, the value +1 being associated with a value +1 or -1 of a transmission ternary code on the basis of which a transmission sequence S is formed and the value -1 being associated with a value 0 of the transmission ternary code.

22. The processing method according to any of the claims 1 to 20, wherein:

- a correlation sequence (R) is a ternary correlation sequence, the values of which assume values +1, 0 or -1 and are formed from the difference between a first binary correlation sequence and a second binary correlation sequence, the first binary correlation sequence consisting of data, the values of which assume at an instant $t_o$, values +1 or 0, the value +1 being associated with a value +1 or -1 of a transmission ternary code on the basis of which is formed a transmission sequence S and the value 0 being associated with a value 0 of the transmission ternary code, and the second binary correlation sequence consisting of data, the values of which are at instant $t_o$, the values of the data which form the first binary correlation sequence at the instant $t_o - 1/f_c$, and

- selection (P(E)) of the sampled rectified received signal is formed from the difference between a first fraction of the sampled rectified received signal taken at instant $t_1$ and a second fraction of the sampled rectified received signal taken at an instant $t_1 - 1/f_C$.

FIG. 1

$$T_S = d \times T_C$$

FIG. 4

FIG. 2

| S | S | S | S | ... | S | S | S | S | -S | 0 | 0 | 0 | -S | -S | 0 | -S |

FIG. 3

EP 2 156 569 B1

FIG. 5A

FIG. 5B

FIG. 5C

EP 2 156 569 B1

+1 +1 +1 +1 0 0 0 0 +1 +1 +1 +1 +1 +1 +1 +1 0 0 0 0 0 0 0 0 0 0 0 0  t

$T_E$  $T_C$

## FIG. 6A

+1 +1 0 0 0 0 0 0 +1 +1 0 0 +1 +1 0 0 0 0 0 0 0 0 0 0 0 0  t

$T_E$  $T_C$

## FIG. 6B

+1 +1 0 0 -1 -1 0 0 +1 +1 0 0 +1 +1 0 0 -1 -1 0 0 -1 -1 0 0 -1 -1 0 0  t

$T_E$  $T_C$

## FIG. 6C

FIG. 7

FIG. 8

FIG. 9

FIG. 12

FIG. 10

FIG. 11

## FIG. 13

## FIG. 14

FIG. 15

FIG. 16

FIG. 17

**FIG. 18A**

EP 2 156 569 B1

EP 2 156 569 B1

FIG. 18B

FIG. 18C

## RÉFÉRENCES CITÉES DANS LA DESCRIPTION

**Documents brevets cités dans la description**

- WO 1996041432 A
- WO 2001073712 A
- WO 2001093442 A
- WO 2001093444 A
- WO 2001093446 A
- US 20050089083 A
- US 20060018369 A
- EP 1465354 A
- EP 1465354 A1

**Littérature non-brevet citée dans la description**

- **FCC.** First report and Order. *FCC 02-48,* 14 Février 2002
- **M. Z. WIN ; R. A. SCHOLTZ.** Impulse radio How it works. *IEEE Comm. Letters,* Février 1998, vol. 2 (2), 36-38
- d2P802-15-4a Draft Standard. *IEEE 802.1 5.4a drafting document*
- **L. STOICA ; A. RABBACHIN ; L OPPERMANN.** A Low-Complexity Noncoherent IR-UWB Transceiver Architecture With TOA Estimation. *MTT 2006,* vol. 54
- **SUNG-YOON JUNG ; DONG-JO PARK.** *Design of Preamble Signal for Synchronization with UWB Non-C Energy Détection Receiver*
- **A. RABBACHIN ; L OPPERMANN.** *Synchronization Analysis for UWB 5 with a Low Complexity Energy Collection Receiver*